(19)

Europäisches
Patentamt
European
Patent Office
Office européen
des brevets

(11)  **EP 4 203 367 A1**

(12)  **EUROPEAN PATENT APPLICATION**

(43) Date of publication:
**28.06.2023  Bulletin 2023/26**

(21) Application number: **21217143.3**

(22) Date of filing: **22.12.2021**

(51) International Patent Classification (IPC):
**H04L 5/00** (2006.01)

(52) Cooperative Patent Classification (CPC):
**H04L 5/0053; H04L 5/001; H04L 5/0094**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Panasonic Intellectual Property
Corporation
of America
Torrance, CA 90504 (US)**

(72) Inventors:
• LI, Hongchao
  63225 Langen (DE)
• SUZUKI, Hidetoshi
  Osaka, 571-8501 (JP)
• HORIUCHI, Ayako
  Osaka, 571-8501 (JP)
• KUANG, Quan
  63225 Langen (DE)

(74) Representative: **Grünecker Patent- und
Rechtsanwälte
PartG mbB
Leopoldstraße 4
80802 München (DE)**

(54)  **USER EQUIPMENT AND BASE STATION INVOLVED IN AN ADAPTATION PROCEDURE**

(57)  The present disclosure relates to a user equipment, UE, comprising the following. A receiver of the UE receives, from a base station, a first control signal that is common to a radio cell or to a group of UEs, to which the UE belongs, wherein the first control signal indicates a target bandwidth part, BWP, for operation. Processing circuitry of the UE operates according to the indicated target BWP.

```
          ┌──────────────┐
          │   UE Start   │
          └──────┬───────┘
                 │
          ┌──────▼───────────────────────────┐
          │       receive control signal       │
          └──────┬───────────────────────────┘
                 │
          ┌──────▼───────────────────────────────────┐
          │ determine operation parameter based on     │
          │            control signal                  │
          └──────┬───────────────────────────────────┘
                 │
          ┌──────▼───────────────────────────────────┐
          │ operate according to determined operation  │
          │              parameter                     │
          └────────────────────────────────────────────┘
```

**Fig. 12**

EP 4 203 367 A1

**Description**

**FIELD OF THE PRESENT DISCLOSURE**

The present disclosure is directed to methods, devices and articles in communication systems, such as 3GPP communication systems.

**TECHNICAL BACKGROUND**

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of 3GGP TR 38.913 version 16.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

**SUMMARY**

One non-limiting and exemplary embodiment facilitates providing procedures for a UE to perform an improved adaptation procedure.

In an embodiment, the techniques disclosed here feature a user equipment, UE, comprising the following. A receiver of the UE receives, from a base station, a first control signal that is common to a radio cell or to a group of UEs, to which the UE belongs, wherein the first control signal indicates a target bandwidth part, BWP, for operation. Processing circuitry of the UE operates according to the indicated target BWP.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

**BRIEF DESCRIPTION OF THE FIGURES**

In the following exemplary embodiments are described in more detail with reference to the attached figures and drawings.

**Fig. 1**    shows an exemplary architecture for a 3GPP NR system;
**Fig. 2**    is a schematic drawing that shows a functional split between NG-RAN and 5GC,
**Fig. 3**    is a sequence diagram for RRC connection setup/reconfiguration procedures,
**Fig. 4**    is a schematic drawing showing usage scenarios of Enhanced mobile broadband (eMBB), Massive Machine Type Communications (mMTC) and Ultra Reliable and Low Latency Communications (URLLC),
**Fig. 5**    is a block diagram showing an exemplary 5G system architecture for a non-roaming scenario,
**Fig. 6**    illustrates the relationship between Bandwidth Parts, Control Resource Sets (CORESETS), search spaces, search space sets, and PDCCH candidates,
**Fig. 7**    illustrates an exemplary time-domain structure in a communication system, such as 5G NR, including radio frames, subframes, slots, and OFDM symbols for different subcarrier spacings,
**Fig. 8**    illustrates a simplified and exemplary implementation of a set of synchronization signal blocks distributed in a half-frame,

| Fig. 9 | illustrates several beams and the corresponding SSB index, SSB1-SSB8, and how the beams are transmitted by the gNB in a beam-sweeping manner, |
| Fig. 10 | an exemplary and simplified structure of a UE and gNB, |
| Fig. 11 | illustrates a structure of the UE according to an exemplary implementation of an improved adaptation procedure, |
| Fig. 12 | is a flow diagram for the UE behavior, according to an exemplary implementation of the improved adaptation procedure, |
| Fig. 13 | illustrates a structure of the base station according to an exemplary implementation of an improved adaptation procedure, |
| Fig. 14 | is a flow diagram for the base station behavior that participates in an exemplary implementation of the improved adaptation procedure, |
| Fig. 15 | is a signaling diagram illustrating an exemplary exchange between the UE and the gNB for an exemplary implementation of the improved adaptation procedure, |
| Fig. 16 and 17 | illustrates the active BWP of three UEs, before and after a respective BWP switch in an exemplary implementation of the improved adaptation procedure, and |
| Fig. 18 | illustrates a change in antenna elements at the gNB and the resulting change in beams and SSBs. |

## DETAILED DESCRIPTION

*5G NR system architecture and protocol stacks*

3GPP has been working at the next release for the $5^{th}$ generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

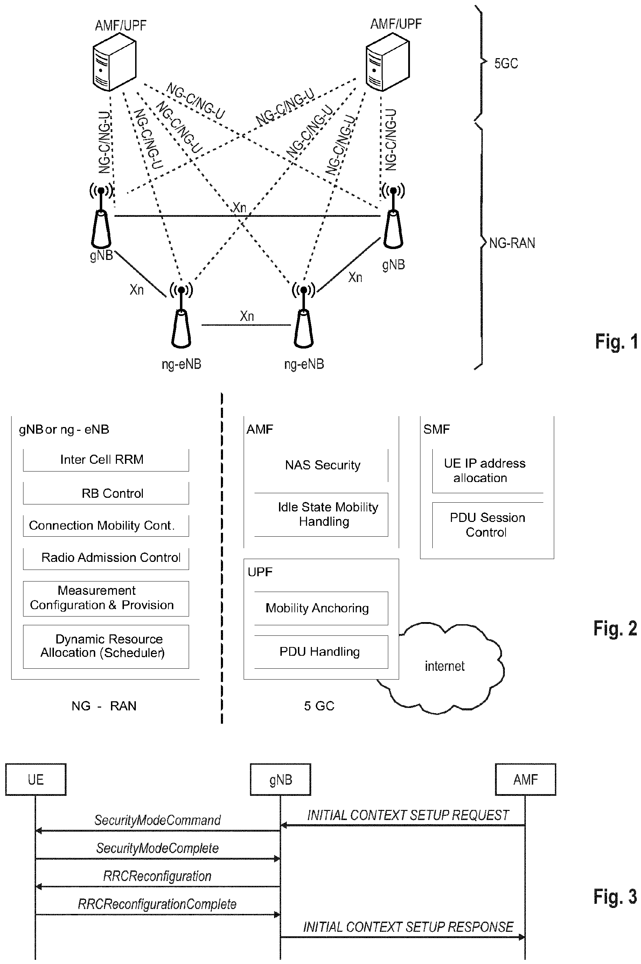

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability ($1-10^{-5}$ within 1ms). Finally, mMTC may preferably require high connection density (1,000,000 devices/$km^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.6.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

*5G NR functional split between NG-RAN and 5GC*

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;

- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:

- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

*RRC connection setup and reconfiguration procedures*

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a Security-ModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

*Usage Scenarios of IMT for 2020 and beyond*

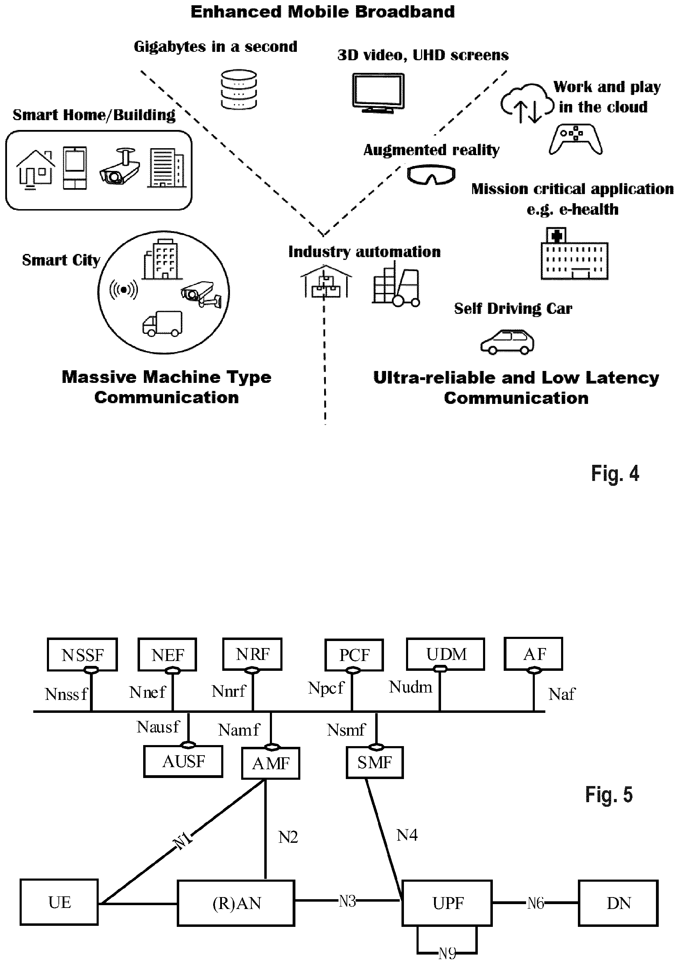

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to $10^6$ level), higher availability, packet sizes of up to 256 bytes, time synchronization down to the order of a few $\mu s$ where the value can be one or a few $\mu s$ depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g. 3GPP TS 23.501 v16.9.0 or v17.1.1, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

*Bandwidth Parts - BWP*

NR systems will support much wider maximum channel bandwidths than LTE's 20 MHz bandwidth (e.g. 100 MHz). Wideband communication is also supported in LTE via carrier aggregation (CA) of up to 20-MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having a single wideband carrier also has merits in terms of low control overhead, as it needs only a single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energy-efficient solution despite the support of wideband operation. Any low-end terminal, which cannot access the whole bandwidth for NR, can benefit therefrom.

A bandwidth part (BWP) is a subset of the total cell bandwidth of a cell, e.g. defined by the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and by telling the UE which one of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum system information.

Although the UE can be configured with more than one BWP (e.g. up to 4 BWP per serving cell, as currently defined for NR), the UE has only one active DL BWP at a time.

There are several types of BWPs: the initial BWP, the firstActiveBWP, the default BWP and then other (regular) BWPs that can be configured for the UE, including a dormant BWP.

The first active DL BWP is the BWP to be active right after the initial attach is completed.

The default DL BWP is the BWP that the UE/BS automatically switches to when there is no activity in the current BWP (see bwp-Inactivity Timer).

The initial UL BWP can be configured for an SpCell and is activated upon performing the reconfiguration in which it is received.

The dormant BWP is one of the downlink BWPs configured by the network, e.g. using the dedicated RRC signaling. In the dormant BWP, the UE stops monitoring PDCCH on/for the Scell. On the other hand, the UE may e.g. continue performing CSI measurements, Automatic Gain Control (AGC) and beam management on the dormant BWP if so configured. For each serving cell other than the SpCell or the PUCCH SCell, the network may configure one BWP as a dormant BWP.

For each SCell a dormant BWP may be configured with *dormantBWP-Id* by RRC signalling as described in TS 38.331. Entering or leaving dormant BWP for SCells is done by BWP switching per SCell or per dormancy SCell group based on an instruction from PDCCH (as specified in TS 38.213). The dormancy SCell group configurations are configured by RRC signalling as described in TS 38.331. Upon reception of the PDCCH indicating to leave the dormant BWP, the DL BWP indicated by *firstOutsideActiveTimeBWP-Id* or by *firstWithinActiveTimeBWP-Id* (as specified in TS 38.331 and TS 38.213) is activated. Upon reception of the PDCCH indicating to enter the dormant BWP, the DL BWP indicated by *dormantBWP-Id* (as specified in TS 38.331) is activated. The dormant BWP configuration for SpCell or PUCCH SCell is not supported. More information on the BWP operation can be found in section 5.15 of 3GPP TS 38.321 v 16.6.0.

Switching between configured BWPs may be achieved in different ways. Operation of Bandwidth parts in uplink and downlink is e.g. defined in a 5G NR compliant implementation in 3GPP 38.321 v16.6.0 section 5.15. BWPs can be switched for instance by means of downlink control information (DCIs) (e.g. using a Bandwidth part indicator in DCI format 0_1 (UL grant) and DCI format 1_1 (DL schedule)), using the bwp-inactivity Timer, using RRC signaling, and by the MAC entity itself upon initiation of the Random Access Procedure. For the Primary Cell (PCell), the initial BWP is the BWP used for initial access, and the default BWP is the initial one unless another initial BWP is explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Some DCI formats do not contain the BWP ID (such as Formats 0_0 and 1_0), while in other DCI formats the number of bits for BWP ID is RRC-configurable and could be 0, 1, 2 bits (such as for Formats 0_1, 0_2, 1_1, and 1_2).

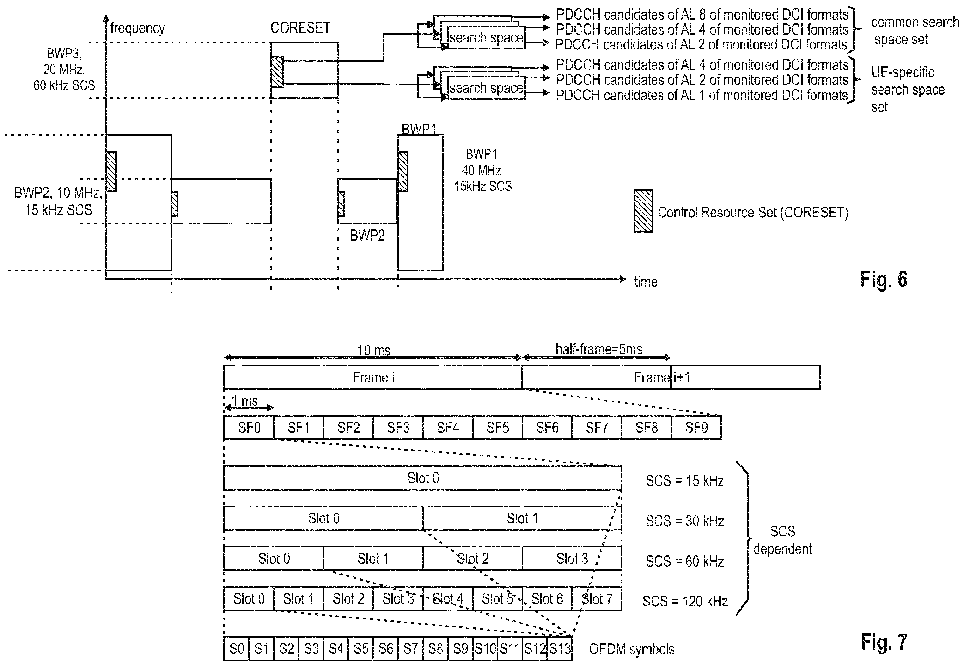

**Fig. 6** illustrates a scenario where three different BWPs are configured, BWP1 with a frequency bandwidth of 40 MHz and a subcarrier spacing of 15 kHz, BWP2 with a width of 10 MHz and a subcarrier spacing of 15 kHz, and BWP3 with a width of 20 MHz and subcarrier spacing of 60 kHz.

The different BWPs can be e.g. configured using suitable information elements of the RRC protocol.

A Carrier Bandwidth Part is a contiguous set of physical resource blocks, selected from a contiguous subset of the common resource blocks for a given numerology(u) on a given carrier.

In more detail and according to one exemplary 5G NR compatible implementation in line with 3GPP 38.331 v16.6.0, the following RRCReconfiguration information elements can be used.

The RRC parameters for BandwidthPart Configuration can be found in TS 38.331, which include at least initialDownlinkBWP, firstActiveDownlinkBWP-Id, defaultDownlinkBWP-Id, bwp-InactivityTimer, initialUplinkBWP, firstActiveUplinkBWP-Id, BWP-Id, locationAndBandwidth, subcarrierSpacing, and so on.

In particular, the Information Element (IE) *BWP-Uplink* is used to configure an additional uplink BWP (not for the initial BWP). The *BWP-Uplink* can define common (e.g. cell specific) parameters of an uplink bandwidth part (*BWP-UplinkCommon* IE) or dedicated (e.g. UE-specific) parameters of an uplink bandwidth part (*BWP-UplinkDedicated* IE) and can be identified by a bwp-Id.

Similarly, the Information Element *BWP-Downlink* is used to configure an additional downlink BWP (not for the initial BWP). The *BWP-Downlink* can define common (e.g. cell specific) parameters of a downlink bandwidth part (*BWP-DownlinkCommon* IE) or dedicated (e.g. UE-specific) parameters of a downlink bandwidth part (*BWP-DownlinkDedicated* IE) and can be identified by a bwp-Id.

The IE *BWP* is used to configure generic parameters of a BWP, such as the parameters locationAndBandwidth, subcarrierSpacing, and cyclicPrefix.

The *BWP-ID* IE is used to refer to the different BWPs. The initial BWP is referred to by BWP-Id 0, while the other BWPs are referred to by BWP-Id 1 to the maximum number of BWPs.

The *DownlinkConfigCommon* IE and also the *DownlinkConfigCommonSIB* IE can define an initial DL BWP using the IE *BWP-DownlinkCommon,* mentioned above. Similarly, the *UplinkConfigCommon* IE and also the *UplinkConfigCommonSIB* IE can define an initial UL BWP using the IE *BWP-UplinkCommon,* mentioned above.

The *ServingCellConfig* IE is used to configure the UE with a serving cell, and can define an initial downlink BWP using the *BWP-DownlinkDedicated* IE mentioned above.

The *ServingCellConfig* IE can also define the default Downlink BWP by indicating a suitable BWP-ID among the configured BWPs. Similarly, the *ServingCellConfig* IE can also define the first active downlink BWP by indicating a suitable BWP-ID among the configured BWPs. The *ServingCellConfig* IE can also define the bwp-inactivity timer value, which is used as a possible mechanism for the UE to switch back to the default BWP upon expiration of the timer.

The *ServingCellConfig* IE can define a dormant BWP using the *dormantBWP-Config-r16* IE, which indicates a BWP ID.

*Control information - Search space sets*

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation, there are a number of different DCI formats defined already (see TS 38.212 v16.7.0 section 7.3.1). An overview is given by the following table.

| DCI format | Usage |
|---|---|
| 0 _0 | Scheduling of PUSCH in one cell |
| 0_1 | Scheduling of PUSCH in one cell |
| 0_2 | Scheduling of PUSCH in one cell |
| 1_0 | Scheduling of PDSCH in one cell |
| 1_1 | Scheduling of PDSCH in one cell |
| 1_2 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2 _2 | Transmission of TPC commands for PUCCH and PUSCH |
| 2_3 | Transmission of a group of TPC commands for SRS transmissions by one or more UEs |
| 2_4 | Cancel UL transmission |
| 2_5 | Notify availability of soft resources |
| 2_6 | Notify power saving information |
| 3_0 | Scheduling for Sidelink, NR PSCCH and NR PSSCH in one cell; |
| 3_1 | Scheduling for Sidelink; LTE PSCCH and LTE PSSCH in one cell |

Further to the above listed DCI formats, a new DCI format 2_7 was just defined and may be agreed and included in further 3GPP standard specifications. DCI format 2_7 is intended to be used for notifying paging early indication and TRS availability indication. The following agreements on the new DCI format 2_7 are preliminary and may still be changed.

7.3.1.3.8 Format 2_7

DCI format 2_7 is used for notifying the paging early indication and TRS availability indication for one or more UEs. The following information is transmitted by means of the DCI format 2_7 with CRC scrambled by PEI-RNTI:

- Paging indication field - $N_{PO}^{PEI} N_{SG}^{PO}$ bit(s), where

  - $N_{PO}^{PEI}$ is the number of paging occasions configured by higher layer parameter *PONumPerPEI* as defined in Clause 10.4A in [5, TS 38.213];

  - $N_{SG}^{PO}$ is the number of sub-groups of a paging occasion configured by higher layer parameter *subgroupsNumPerPO,* if *subgroupsNumPerPO* is configured and not set to 0; otherwise $N_{SG}^{PO}$ is set to 1.

Each bit in the field indicates one UE subgroup of a paging occasion if subgroupsNumPerPO is configured and not set to 0; otherwise each bit in the field indicates the UE group of a paging occasion.

- TRS availability indication - 1, 2, 3, 4, 5, or 6 bits if *TRS-ResourceSetConfig* is configured; 0 bits otherwise.

The size of DCI format 2_7 is indicated by the higher layer parameter *payloadSizeDCI_format2_7,* according to Clause 10.4A of [5, TS 38.213]. If the number of information bits in format 2_7 is less than the size of format 2_7, the remaining bits are reserved.
In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 version 16.7.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set).

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

Conceptually, **Fig. 6** provides an exemplary illustration of the relationship between bandwidth parts, CORESETS, search spaces, search space sets and the PDCCH candidates that a UE can monitor. As apparent from Fig. 6, one CORESET is illustrated per BWP, although more than one are possible. Each CORESET can then have several search spaces of one or more PDCCH candidates of a particular Aggregation Level (such as AL2, 4 or 8), which in turn can then be grouped into a search space set, such as a common SS set and a UE-specific SS set.

*Search Space Set group switching*

In 3GPP, the concept of configuring at least two groups of search space sets (abbreviated as SSS or SS set) for monitoring of the PDCCH has been discussed. This concept can be e.g. specifically useful for operation in the unlicensed radio spectrum, where the gNB has to first acquire the channel in order to then be allowed to transmit a PDCCH. For instance, the different SSS groups can differ by when and/or how long the UE is required to monitor the PDCCH during a slot.

The various groups may comprise various search space sets. A single search space set can be part of more than one SSS group.

According to one exemplary aspect of the concept, the UE can be configured to switch between the groups. One particular exemplary implementation of a search space set switching is defined in the 3GPP specs for 5G NR, particularly TS 38.213 v16.7.0, section 10.4 *"Search space set group switching"*.

*Time-domain in 5G NR*

In the time domain, transmissions in 5G NR are organized into frames of length 10ms, each of which is divided into 10 equally sized subframes of length 1ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit. This frame structure, on which the 3GPP 5G NR communication is based, is illustrated exemplarily in **Fig. 7.**

5G NR provides a plurality of slot formats, and a slot format indicates how each of the symbols within a single slot is used. It defines which symbols within a specific slot are used for uplink and which symbols are used for downlink. In LTE TDD, if a subframe (equivalent to a slot in NR) is configured for DL or UL, all of the symbols within the subframe should be used as DL or UL. But in NR, each of the symbols within a slot can be configured differently as DL or UL. Also flexible symbols exist, which can be configured as DL or UL. In the exemplary 5G NR compliant implementation, the gNB uses a slot format indicator (SFI) to inform the UE about the slot format to be used (see also TS 38.213 v16.7.0 section 11.1.1). For instance, the slot format indicator includes an index value, associated with a slot format (e.g. in the form of a table):

The following table illustrates exemplarily how each OFDM symbol in a slot can be defined as either a downlink (D), uplink (U) or flexible (F) OFDM symbol.

| Slot Format | Symbol number in a slot | | | | | | | | | | | | |
|---|---|---|---|---|---|---|---|---|---|---|---|---|---|
| | 0 | 1 | 2 | 3 | 4 | 5 | 6 | 7 | 8 | 10 | 11 | 12 | 13 |
| 0 | D | D | D | D | D | D | D | D | D | D | D | D | D |
| 1 | U | U | U | U | U | U | U | U | U | U | U | U | U |
| 2 | F | F | F | F | F | F | F | F | F | F | F | F | F |

(continued)

| Slot Format | Symbol number in a slot | | | | | | | | | | | | |
|---|---|---|---|---|---|---|---|---|---|---|---|---|---|
| | 0 | 1 | 2 | 3 | 4 | 5 | 6 | 7 | 8 | 10 | 11 | 12 | 13 |
| | | | | | | | | | | | | | |
| 38 | D | D | F | F | U | U | U | U | U | U | U | U | U |

*Synchronization Signal Block measurement timing configuration - SMTC - PSS/SSS, PBCH*

NR has introduced the so-called synchronization signal block, SS block (SSB), which comprises a Primary Synchronization Signal (PSS), a Secondary Synchronization Signal (SSS), and a Physical Broadcast CHannel (PBCH) (in fact PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is defined in 3GPP TS 38.212 and is composed complex values used by each element/sample of the sequence. Information on the current exemplary 5G implementation of the PSS and SSS is available from TS 38.211 v16.7.0 sections 7.4.2 and 7.4.3, including the respective sequence generation and mapping to physical resources.

The time-frequency structure of an SS/PBCH block, carrying the SSS is described in the TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

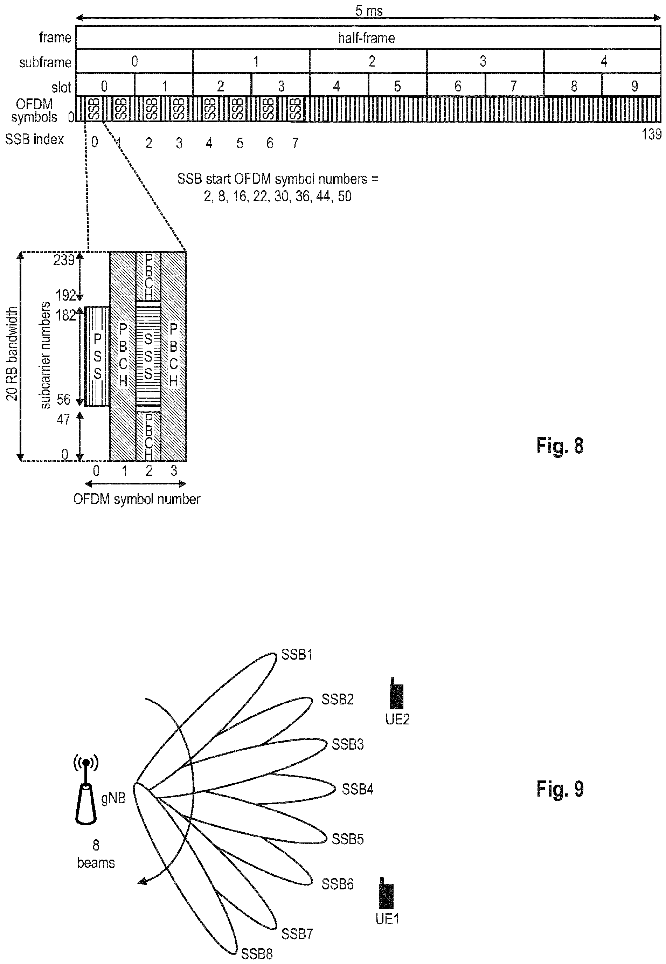

A simplified and exemplary illustration of the SSB according to the above definitions is illustrated in **Fig. 8,** which shows at the bottom part the PSS, SSS, and PBCH in the time and frequency domain.

The timing (OFDM symbols) at which the SS-blocks (see Fig. 8) are transmitted by the gNB can be defined differently. In particular, the first symbol indexes (within each half-frame with an SSB) with which a candidate SSB starts is determined according to 3GPP 38.213 v16.7.0, section 4.1 "Cell search". In this example 5G NR implementation, the first symbol indexes depend on the SCS (e.g. 15 kHz, 30 kHz, 120 kHz, 240kHz), the type of channel access (e.g. without shared spectrum channel access, with shared spectrum channel access), and the carrier frequencies (e.g. < 3GHz, >3GHz, < 1.88 GHz, >1.88GHz, < 6GHz, >6GHz). An example set of SSBs is illustrated in Fig. 8, assuming start OFDM symbols of 2, 8, 16, 22, 30, 36, 44, and 50 (case of SCS=30 kHz, and frequency > 3 GHz), wherein the relevant OFDM symbol numbering starts with 0 in a half frame. The number of SSBs in a set of SSBs can also be limited to a maximum Lmax. In one example, the SSB set can comprise 4, 8 or 64 SSBs.

The time-domain periodicity can be defined in the *ServingCellConfigCommon* or *ServingCellConfigCommonSIB* IEs using the field ssb-periodictyServingCell, among the values ms5, ms10, ms20, ms40, ms80, ms160.

The candidate SS/PBCH blocks in a half frame (e.g. termed a set of SSBs) are indexed in an ascending order in time from 0 to *Lmax* - 1. Correspondingly, each SSB within a set of SSBs is assigned a unique number (starting from 0 and increasing by 1).

The SSB set illustrated above in Fig. 8 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponds set of SSBs, including periodicity.

The gNB informs the UE about the SSB pattern, i.e. which SSBs are in fact transmitted and which are not. This can be done e.g. by the gNB transmitting an SSB bitmap, which defines the SSB pattern, wherein each bit of the SSB bitmap.

The length of the SSB bitmap depends on the applicable SSB set, e.g. 4, 8, or 64 bits.

According to one example option, the information element *ssb-PositionsInBurst* of the RRC protocol can be transmitted as part of the *ServingCellConfigCommon* and *ServingCellConfigCommonSIB* information elements (see 3GPP TS 38.331 v16.6.0, section 6.3.2). The *ssb-PositionsInBurst* IE indicates the time domain positions of the transmitted SSBs in an SS burst. A bitmap can be used for the indication, e.g. {1,1,1,1,1,1,1,1} means all 8 SSBs of the set are transmitted, or {1,0,1,0,1,0,1,0} means only 4 SSBs of the set are transmitted particularly with the SSB index #0, 2, 4, 6, out of 8 SSBs.

Two examples are provided in the following:

```
ServingCellConfigCommon ::= SEQUENCE {
  ....,
  ssb-PositionsInBurst CHOICE {
    shortBitmap BIT STRING (SIZE (4)),
    mediumBitmap BIT STRING (SIZE (8)),
    longBitmap BIT STRING (SIZE (64))
  },
  ssb-periodicityServingCell ENUMERATED { ms5, ms10, ms20, ms40, ms80, ms160,
                          spare2, spare1 }
                          ServingCellConfigCommonSIB ::= SEQUENCE {
  ssb-PositionsInBurst SEQUENCE {
    inOneGroup BIT STRING (SIZE (8)),
    groupPresence BIT STRING (SIZE (8)) OPTIONAL --
    Cond Above6GHzOnly
  ssb-periodicityServingCell ENUMERATED { ms5, ms10, ms20, ms40, ms80, ms160,
                          spare2, spare1 } }
```

Among the SSBs defined in different bandwidth parts, one of them is defined as a Cell-Defining SSB, which is that SSB that is associated with an RMSI (Remaining Minimum System Information).

In brief, a set of candidate SSBs is configured for use by the gNB in the cell. Furthermore, among the set of candidate SSBs, the gNB can then select either all or fewer candidate SSBs to actually transmit, called an SSB pattern.

In one example, the transmission power to be used by the gNB for transmission of the SSBs can be informed to the UE by the higher layer parameter *ss-PBCH-BlockPower,* which can be found in TS 38.331. It defines an average EPRE (Energy per Resource Element) of the resource elements that carry secondary synchronization signals in dBm that the gNB uses for SSB transmission (see also TS 38.213, clause 7).The UE assumes that SSS, PBCH DM-RS, and PBCH data have same EPRE. The UE may assume that the ratio of PSS EPRE to SSS EPRE in a SS/PBCH block is either 0 dB or 3 dB.

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 9.** Similar to the exemplary assumption of Fig. 8, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanism, such as for serving cell measurements, time / frequency synchronization etc.

*Reference Signals*

Several different types of reference signals (RS) are used for 5G NR (see 3GPP TS 38.211 v16.7.0 section 7.4.1). At least the following reference signals are available in 5G NR:

- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH,
- Tracking Reference Signal, usable for time tracking, also called "CSI-RS for tracking" (see TS 38.214)

- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission with a configuration density by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is UE-specific; nonetheless, multiple users can share the same CSI-RS resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

For instance, a single-port CSI-RS occupies a single resource element within a resource block in the frequency domain and one slot in the time domain. While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

The Tracking Reference Signal, TRS, is a further reference signal that can be used for synchronizing the time and/or frequency with the gNB. Detailed information on the TRS according to current 5G definition can be found in TS 38.331 v16.6.0, section 6.3.2, particularly in the information element *NZP-CSI-RS-ResourceSet.* Further information on the TRS is available from TS 38.214 v16.7.0, section 5.2.2.3.1. "NZP CSI-RS": Furthermore, TS 38.214 v16.6.0 section 5.1.6.1.1, specifies the condition about how multiple CSI-RS are grouped into a TRS and restriction about configuration of each CSI-RS that are grouped into a TRS .

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

In one exemplary 5G NR implementation, a table (see e.g. TS 38.211, table 7.4.1.5.3-1) defines a set of candidate CSI-RS configurations, wherein each candidate CSI-RS configuration defines a set of resource elements (within a slot) on which the reference signal is transmitted. The different CSI-RS configurations differ from one another, e.g. in the number of ports, in the density and/or the cdm-type (code division multiplexing type). The gNB can inform the UE which CSI-RS the gNB is currently transmitting, using the IE *CSI-RS-ResourceMapping* that configures the resource element mapping of a CSI-RS resource in the time- and frequency domain.

*Network energy saving study item*

As part of the global trend to reduce the impact of Information and Communication Technology (ICT) equipment on the environment and the constant desire to reduce the network operator's operational expenses, 3GPP has been working for years on standards for the energy efficiency of mobile networks.

Energy saving can be implemented for the UE, including mechanisms for:

- a UE-specific BWP adaptation and use of a dormancy SCell (using DCI format 0_1 (for UL) and DCI format 1_1 (for DL),
- a UE or UE-group specific time domain adaptation by DRX and using the DCI format 2_6
- a UE-group-specific CSI-RS / TRS availability indication for IDLE/INACTIVE UEs by DCI format 2_7 and paging
- DCI-based PDCCH monitoring adaptation by PDCCH skipping and SSSG (Search Space Set Group) switching

3GPP is currently studying network energy saving for Release 18 and concludes that there is a need to study and develop a network energy consumption model, KPIs (Key Performance Indicators), an evaluation methodology and a need to identify and study network energy saving techniques in targeted deployment scenarios. The study should investigate how to achieve more efficient operation dynamically and/or semi-statically and finer granularity adaptation of transmissions and/or receptions in one or more of network energy saving techniques in time, frequency, spatial, and power domains, with potential support/feedback from UE, potential UE assistance information, and information exchange/coordination over network interfaces.

The study item intends to study and identify techniques on the gNB and UE side to improve network energy savings in terms of both BS transmission and reception [RAN1, RAN2, RAN3, [RAN4]]. The study should prioritize idle/empty and low/medium load scenarios (the exact definition of such loads is left to the study).

One goal is that legacy UEs should be able to continue accessing a network implementing Rel-18 network energy savings techniques, with the possible exception of techniques developed specifically for greenfield deployments.

To achieve network energy saving, dynamic network level radio resource adaptation is a key part of the Rel.18 study. When gNB operates network level resource adaptation, the new feature may

- Support L1-based indication for dynamic traffic adaptation. Semi-static adaptation can also be considered.
- Enable dynamic time, frequency, spatial, and/or power domain adaptation with unified framework for better efficiency. Each domain adaptation can operate individually or jointly with each other.
- Support cell-specific or UE group level indication for less control overhead.
- Support both DL and UL adaptation, as gNB transmission and reception are both within the SID scope.

*Further Improvements*

In the above, the study item for network energy saving for 3GPP Release 18 was briefly presented. The inventors have identified the need for supporting a cell level or UE-group specific and dynamic adaptation mechanism for a network energy saving mechanism in one or more of the frequency, time, and spatial domain. Mechanisms that are currently available in the 3GPP standards for allowing energy saving are not well adapted for implementing energy saving at the network side.

The inventors have thus identified the possibility of providing an improved adaptation procedure for an adaptation of the operation between the UE(s) and base station that allows avoiding or mitigating one or more of the above-identified problems, and that particularly allows to save energy at the network side. The present invention relates to different solutions and variants for such an improved adaptation procedure.

*Embodiments*

In the following, UEs, base stations, and respective procedures to meet these needs will be described for the new radio access technology envisioned for the 5G mobile communication systems, but which may also be used in previous LTE mobile communication systems or future mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

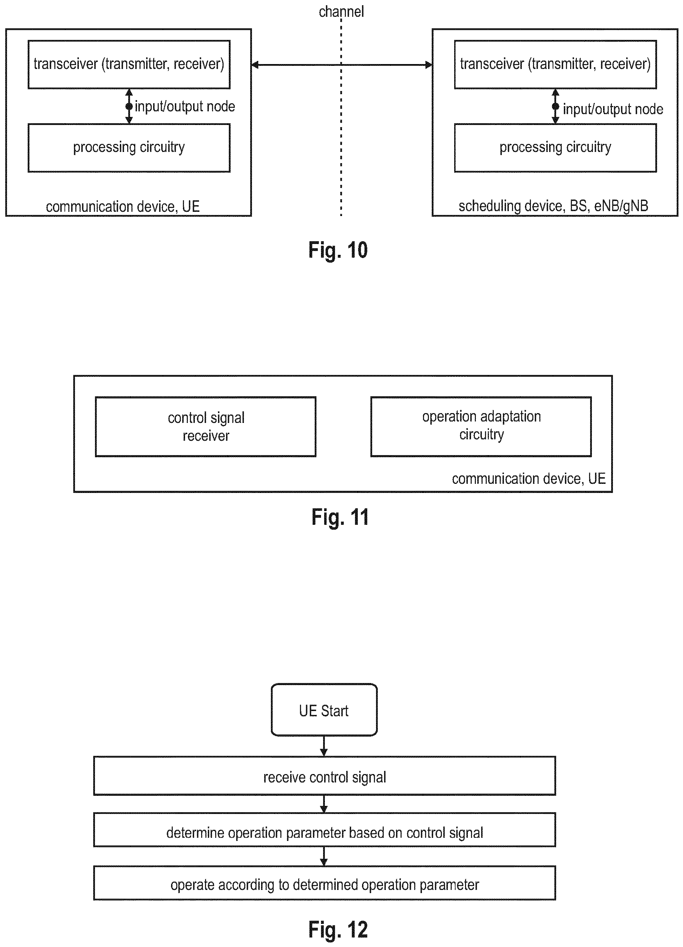

**Fig. 10** illustrates a general, simplified and exemplary block diagram of a user equipment (also termed communication device) and a scheduling device (here exemplarily assumed to be located in the base station, e.g. the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of an improved adaptation procedure will be described in the following. In said connection, improved UEs, improved base stations and improved integrated circuits are presented, which participate separately or together in the improved adaptation procedure. Corresponding methods for the UE behavior and the base station behavior are provided as well. The integrated circuits correspond to the UE and base station, and respectively their behavior.

**Fig. 11** illustrates a simplified and exemplary UE structure according to an exemplary implementation of the improved adaptation procedure, which can be implemented based on the general UE structure explained in connection with Fig. 10. The various structural elements of the UE illustrated in said Fig. 11 can be interconnected between one another e.g. with corresponding input/output nodes (not shown) e.g. in order to exchange control and user data and other signals. Although not shown for illustration purposes, the UE may include further structural elements.

As apparent from Fig. 11, the UE may include a control signal receiver and an operation adaptation circuitry. According to the different solutions presented below, the operation adaptation may relate to one or more of the BWP operation, the SSB operation, the RS operation, the time-domain operation, the PDCCH monitoring operation and the search space set operation.

In the present case as will become apparent from the below disclosure, the receiver of the UE can thus be exemplarily configured to at least partly perform one or more of receiving control signals, such as the BWP control signal, the SSB control signal, the RS control signal, the time-domain-control signal, the PDCCH-adaptation control signal, etc.

In the present case as will become apparent from the below disclosure, the processing circuitry of the UE can thus be exemplarily configured to at least partly perform one or more of determining the operation parameter from the received control signal, and operating according to the determined operation parameter, etc.

In the present case as will become apparent from the below disclosure, the transmitter of the UE can thus be exemplarily configured to at least partly perform one or more of transmitting data to the base station, etc.

One exemplary procedure as will be disclosed in more detail further below is implemented by a UE that includes the following. A receiver of the UE receives, from a base station, a first control signal that is common to a radio cell or to a group of UEs, to which the UE belongs, wherein the first control signal indicates a target bandwidth part, BWP, for operation. Processing circuitry of the UE operates according to the indicated target BWP.

A corresponding exemplary method comprises the following steps performed by a UE:

receiving, from a base station, a first control signal that is common to a radio cell or to a group of UEs, to which the UE belongs, wherein the first control signal indicates a target bandwidth part, BWP, for operation,

operating according to the indicated target BWP.

A corresponding sequence diagram for an exemplary UE behaviour in line with the above-discussed UE and UE method is illustrated in **Fig. 12.** As apparent therefrom, the UE receives the control signal, and then determines therefrom the operation parameter. The UE proceeds to operate according to the determined operation parameter, e.g. as explained below in the different solutions, according to the indicated BWP, SSB, RS, blank time periods, PDCCH skipping and the target SSS group.

The above-described improved adaption procedure thus achieves the object and overcomes some of the drawback explained above. In particular, the UE is able to properly process a cell-common or UE-group common control signal from the base station and thus to operate according to operation parameters determined at the base station side to facilitate the network energy saving.

Some exemplary implementations of the improved adaptation procedure also involve the base station, to which the UE is currently connected (termed e.g. serving base station because the base station serves the UE). Correspondingly, the improved adaptation procedure also provides an improved base station that participates therein.

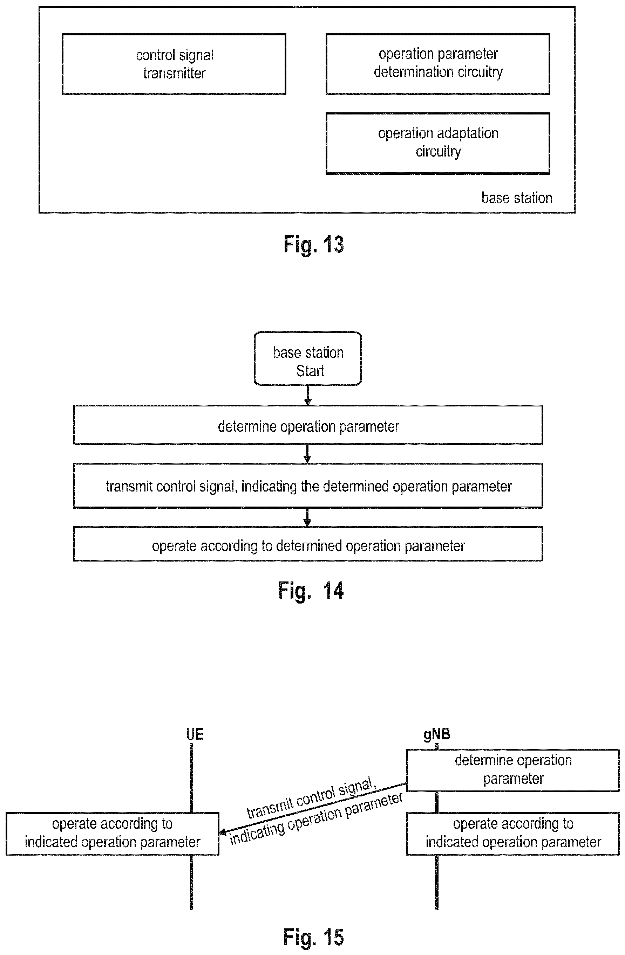

**Fig. 13** illustrates a simplified and exemplary base station structure according to an exemplary implementation of the improved adaptation procedure, which can be implemented based on the general base station structure explained in connection with Fig. 10. The various structural elements of the base station illustrated in said Fig. 13 can be interconnected between one another e.g. with corresponding input/output nodes (not shown) e.g. in order to exchange control and user data and other signals. Although not shown for illustration purposes, the base station may include further structural elements.

As apparent therefrom, the base station comprises a control signal transmitter, an operation parameter determination circuitry and an operation adaptation circuitry. According to the different solutions presented below, the operation adaptation and operation parameter may relate to one or more of the BWP operation, the SSB operation, the RS operation, the time-domain operation, the PDCCH monitoring operation and the search space set operation.

In the present case as will become apparent from the below disclosure, the receiver of the base station can thus be exemplarily configured to at least partly perform one or more of receiving data from the UE etc.

In the present case as will become apparent from the below disclosure, the processing circuitry of the base station can thus be exemplarily configured to at least partly perform one or more of determining the operation parameters and adapting its operation to the determined operation parameters, etc.

In the present case as will become apparent from the below disclosure, the transmitter of the base station can thus be exemplarily configured to at least partly perform one or more of transmitting the control signal such as the BWP control signal, the SSB control signal, the RS control signal, the time-domain-control signal, the PDCCH-adaptation control signal, etc.

One exemplary procedure as will be disclosed in more detail further below is implemented by a base station that includes the following. a processing circuitry of the base station determines a target bandwidth part, BWP, for operation. A transmitter of the base station transmits, to all UEs in the radio cell or to a group of UEs, a first control signal, wherein the first control signal is common to the radio cell or to the group of UEs and indicates the target BWP. The processing circuitry operates according to the indicated target BWP.

A corresponding method comprises the following steps performed by the base station:

determining a target bandwidth part, BWP, for operation,

transmitting, to all UEs in the radio cell or to a group of UEs, a first control signal, wherein the first control signal is common to the radio cell or to the group of UEs and indicates the target BWP,

operating according to the indicated target BWP

A corresponding sequence diagram for an exemplary base station behavior in line with the above-discussed base station and corresponding method is illustrated in **Fig. 14.** The sequence diagram illustrates an exemplary and simplified implementation of the above presented base station method. As apparent therefrom, the base station determines the operation parameter, and then generates and transmit a suitable control signal, for indicating the determined operation parameter to the UE(s). The base station (in correspondence with the UE) operates according to the determined operation parameter as instructed to the UEs.

**Fig. 15** illustrates a simplified and exemplary interaction between the improved UE and improved base station (here e.g. gNB) of the above discussed improved adaptation procedure. In this solution presented in Fig. 15, the interaction first involves the determination of the operation parameter, which is under control of the base station. The control signal, indicated that operation parameter, is transmitted from the base station to a UE (e.g. a group of UEs or all UEs in the radio cell). Both the UE and the base station then proceed to operate according to the indicated operation parameter.

In the following, more specific implementations and variants of the above discussed operations will be described. The description will be presented from both the UE and base station perspective. Different solutions are presented for allowed energy saving at the network side in the different time, frequency and spatial domain.

As an overview, according to a first solution, network energy saving is facilitated by adapting the frequency-domain operation between the UE and the base station, in particular by adapting the bandwidth part used between the UE and the base station. According to a second solution, network energy saving is facilitated by adapting the spatial-domain operation between the UE and the base station, in particular by adapting the SSB and/or the reference signals (RS) used between the UE and the base station. According to a third solution, network energy saving is facilitated by adapting the time-domain operation between the UE and the base station, in partial by defining blank time periods during which the UE and base station are allowed to skip some operation. According to a fourth solution, network energy saving is facilitated by adapting the downlink-control-channel related operation between the UE and the base station, in particularly by skipping the downlink control channel operation and/or by switching to a different SSS group.

At first, the four solutions will be described as stand-alone solutions, wherein one or more of these four solutions can be implemented separately and independently from one another. In other words, the UE and base station can implement one, more or all of the four solutions.

However, it is also possible that two, more or all of the four solutions are combined and implemented together, so as to achieve synergetic effects. This will be explained as part of a further, called fifth, solution.

*First solution - frequency domain - BWP adaptation*

According to this first solution, network energy saving is facilitated by adapting the frequency-domain operation between the UE and the base station, in particular by adapting the bandwidth part used between the UEs and the base station. This improved BWP adaptation procedure is under control of the base station, which is responsible to determine the target BWP for operation and to inform the UEs accordingly.

In particular, the base station intends to adapt its overall system bandwidth, e.g. by reducing the system bandwidth, so as to save energy. To said end, the base station determines a target bandwidth part to be instructed to the UEs.

Which BWP the base station determines as the target BWP may depend on different criteria. For instance, the base station can take into account the current traffic situation with the UEs in its radio cell, the intended amount of energy saving at the network side, the current BWP configuration of the UEs in the radio cell of the base station, or other criteria. For instance, depending on the system level throughput estimation or the required spectrum efficiency, or served UE number and so on, gNB may decide to operate a relatively wider or narrower BWP to adapt to the traffic and to save energy when possible.

In particular, the UEs in the radio cell of the base station are operating according to bandwidth parts that were configured to the UE before. Thus, the currently-active BWP at the BWP may differ between the various UEs, or may overlap or be the same for some UEs. For instance, from the perspective of each UE, the current active BWP could be an initial BWP, a default BWP, a dormant BWP or also a common BWP configured to that particular UE.

According to the improved BWP adaptation procedure, the resulting target bandwidth part can be one of:

- a default BWP configured at the UEs,

- an initial BWP configured at the UEs,

- a dormant BWP configured at the UEs,

- a first non-dormant BWP configured at the UEs,

- a common BWP configured at the UEs, common to all UEs in the radio cell of the base station or common to the group of UEs.

The various BWPs as listed above as candidates for the target BWP can be configured beforehand by the base station to the UEs.

When the UE receives the BWP control signal indicating the target BWP for operation, the UE proceeds to operate according to this target BWP, instead of the currently-active BWP. In one example, the UE operation may include a check to determine the currently-active BWP. If the indicated target BWP is indeed different from the currently-active BWP, the UE switches its operation to the indicated target BWP. Otherwise, i.e. the currently-active BWP is the same as the target BWP, the UE need not perform an actual switch, but can continue with its current BWP operation.

The UE and base station thus proceed operating based on the target BWP, including performing any BWP-related functions based on the target BWP (rather than a previously-active BWP). The BWP-related functions may include e.g. a random access procedure or the monitoring of the downlink control channel (e.g. PDCCH).

Correspondingly, the base station and all the UEs in the radio cell of the base station (or a group of UEs thereof) operate according to the target BWP (e.g. a common BWP) such that the base station can save network energy.

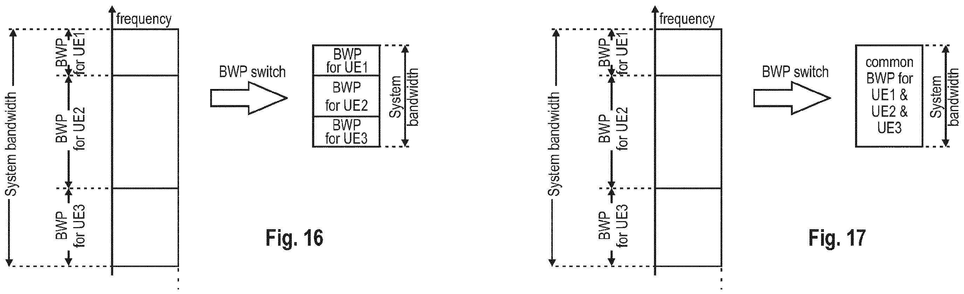

**Fig. 16** illustrates for three UEs, UE1-UE3, the BWPs active before and after the target BWP adaptation and the resulting system bandwidth. As apparent from Fig. 16, the BWP of the three UEs together occupy the system bandwidth, with which the base station operates. The three UEs could be all UEs in the cell of the base station, where the BWP control signal could be a cell-common BWP control signal to reach the three UEs. Alternatively, the three UEs belong to the same UE group, and the necessary BWP control signal could be common to that group of UEs, UE1-UE3.

It is exemplary assumed that the target BWP indicated by the BWP control signal of the first solution is one of the default BWP, the initial BWP or the dormant or first-dormant BWP, respectively configured beforehand at the UEs. For instance, after receiving the BWP control signal, UE1 switches to its own default BWP as illustrated in Fig. 16, UE2 switches to its own default BWP as illustrated in Fig. 16, and UE3 also switches to its own default BWP as illustrated in Fig. 16. The resulting system bandwidth is smaller than the previous system bandwidth, and the base station thus operates with a smaller bandwidth and can save energy.

The resulting system bandwidth used by the three UEs depends on the UE-specific configuration of the BWP at the UE that is instructed as the target BWP by the BWP control signal. The base station configured the various BWPs in advance, such as the default BWP, the initial BWP, the dormant BWP, and common BWP. In the above exemplary illustration of Fig. 16, the three default BWPs were assumed to be contiguous to each other and respectively smaller than the previously active BWP. However, this was only an example. The three default BWPs could also be overlapping or non-contiguous. In order to facilitate network energy saving, the resulting system bandwidth resulting from the sum of the three target BWPs can be smaller than before.

**Fig. 17** is similar to Fig. 16, but assumes that the target BWP is a BWP that is common, e.g. common to all UEs in the radio cell or common to the group of three illustrated UEs. Correspondingly, the three UEs use the same frequency band of the common BWP, which thus corresponds to the system bandwidth at the base station.

As mentioned above, the BWP control signal can be common to all UEs of a cell of the base station or can be common to a group of UEs in the cell of the base station. Compared to a UE-specific control of the UEs in the radio, using such a cell-common or UE-group-common control signal for adapting the frequency-domain operation is more efficient and causes less control overhead.

The base station determines one of a cell-common and UE-group-common BWP control signal, and then transmits the BWP control signal in its radio cell. The determination by the base station of whether to transmit a cell-common or UE-group-common BWP control signal may also depend on the target BWP and which UEs the base station should reach to allow to save energy.

In the above, it was exemplary assumed that the system bandwidth of the base station is reduced so as to facilitate network energy saving. However, the improved BWP adaptation procedure may also involve an increase of the system bandwidth, e.g. when the network energy saving functionality is to be reduced or stopped. Correspondingly, the base station in such a case can configure some or all of the UEs in its radio cell to work according to another BWP than the target BWP instructed before.

According to one option, the base station can instruct each UE separately in a UE-specific way, e.g. using signaling as already defined in the current 3GPP 5G compliant standards, in particular using the Bandwidth part indicator in DCI format 0_1 or 1_1.

According to another option, the BWP control signal according to the improved BWP adaptation procedure of the first solution can be also used for re-configuring the BWP operation of the UE(s). In one example, the base station may determine yet another target BWP for operation, as explained above, and then provide the BWP control signal to the UE(s). In that case, the new target BWP could have the same or a larger frequency bandwidth as the target BWP instructed before.

In another example, the base station can decide to revert the BWP operation back to the original one for each UE, i.e. that BWP that the UEs were using before switching to the target BWP. The cell/UE-group common BWP control signal could thus include a suitable trigger for each UE to revert back to the original BWP. The trigger could be for instance a pre-configured value of the target BWP indicator, not used to identify a target BWP.

According to still another example, the BWP adaptation procedure may also involve the UE behaviour of reverting back to the original BWP, after a timer expires. The timer is triggered to count starting from the time the UE is indicated to use the target BWP. The value of the timer can be configured by the gNB through RRC, configuration, MAC CE or DCI.

In the above, it was assumed that the target BWP for subsequent operation is indicated to the UE. The following exemplary variants relate to how the target BWP can be indicated by the BWP control signal. In one exemplary variant, the target BWP for operation can be indicated by a suitable indicator included in the BWP control signal. The target BWP indicator can have one or more bits and identifies the target BWP out of a set of BWPs. The number of bits of the target BWP indicator can be defined to be enough to distinguish unambiguously between the BWPs in the set.

The set of BWPs can be configured by the base station in advance using suitable BWP configuration signaling. Correspondingly, different BWPs can be defined, with corresponding BWP IDs. The base station can generate the BWP control signal to include the BWP ID of the determined target BWP as the target BWP indicator. The UE in turn can determine from the received BWP ID the corresponding target BWP among the set of previously-configured BWPs.

According to one example, for configuring the set of BWPs in advance a similar or same mechanism as explained above for the 5G NR compliant implementation can be used, e.g. based on suitable information elements of the RRC signaling.

The following exemplary variants relate to how the BWP control signal itself can be implemented. Generally, the BWP control signal can be a downlink control information, DCI, message. According to one option, a new DCI message can be defined, not yet defined in the 3GPP 5G standards, which includes a suitable field to carry the target BWP indication.

Another option is to reuse an already existing DCI message to carry the BWP control signal. For instance, the existing DCI message could be

- a DCI message for paging,

- a DCI message for notifying one or more of a slot format and search space set group switching, for example a DCI message having the same or similar format as the DCI format 2_0 mentioned above for 3GPP 5G compliant communication systems,

- a DCI message for notifying power saving information, for example a DCI message having the same or similar format as the DCI format 2_6 mentioned above for 3GPP 5G compliant communication systems,

- a DCI message for notifying one or more of whether to start monitoring a paging early control signal and of whether a reference signal is available, for example a DCI message having the same or similar format as the DCI format 2_7 mentioned above for 3GPP 5G compliant communication systems.

When reusing such an existing DCI message, a new field can be added or an already existing field can be reused to carry the target BWP indication.

Alternatively, the BWP control signal can be a message of the Radio Resource Control, RRC, protocol. For instance, when the base station reconfigures UEs for changing some of the RRC parameters, the RRC may also reconfigure the BWP in a whole batch without special DCI overhead. Another example is the switching of the BWP can be periodic, which can be RRC configurable, e.g. UE stays in BWP#1 for a duration N slots and then switches to BWP#2 and stays for a duration M slots. This does not require additional DCI overhead and gNB can save energy in a periodic way.

According to still another alternative, the BWP control signal can be implemented as a control element of the Medium Access Control, MAC, protocol.

Furthermore, as was explained above, the BWP control signal transmitted by the base station can be either common to a cell or common to a group of UEs.

According to a first exemplary variant, the BWP control signal can be addressed to an identifier that is common to a complete radio cell, such that all UEs that are located in that radio cell will determine that the BWP control signal is intended for them and will proceed to process the BWP control signal. In one example, it may be assumed that the BWP control signal is a DCI message, in which case a cell-common identifier (e.g. RNTI) can be used for scrambling the DCI message.

According to a second exemplary variant, the BWP control signal can be addressed to an identifier that is common to a group of UEs. Each UE in the group knows the group identifier, such that the UE will determine that the BWP control signal is intended for it and will proceed to process the BWP control signal. In one example, it may be assumed that the BWP control signal is a DCI message, in which case a UE-group-common identifier (e.g. RNTI) can be used for scrambling the DCI message.

According to a third exemplary variant, the BWP control signal can be addressed to a group of UEs by including several blocks of information, wherein each information block is destined for one or more UEs. Correspondingly, a UE is informed with which information block it is associated, and then, when receiving the BWP control signal, each UE can read the corresponding information block. According to one example, the BWP control signal can be a DCI message, e.g. having the same or similar format as DCI format 2_6 described above in connection with the 3GPP implementation.

As explained above, one variant of the first solution allows to implement a UE-group-common BWP control signal. The following description relates to details on how the base station determines the group of UEs to which to address the BWP control signal. By only adapting the BWP operation of a UE group, it is also possible to reduce the system bandwidth and thus save energy at the network side. As one example, when the traffic of a group of UEs is getting low, this group of UEs may use a narrower BWP. Consequently, one option to determine a group of UEs is to select them based on the traffic status.

*Second solution - spatial domain - SSB and RS adaptation*

According to this second solution, network energy saving is facilitated by adapting the spatial-domain operation between the UE and the base station, in particular adapting the SSB and/or the reference signals (RS) used between the UE and the base station. This improved spatial-domain adaptation procedure is under control of the base station.

The improved adaptation procedure according to the second solution assumes that by providing an improved mechanism to dynamically adapt the spatial-domain operation between the UE and the base station, the base station can adapt the operation to the current traffic load and coverage while additionally allowing to save energy (especially at the network side). For instance, the base station can adjust one or more of the following hardware parameters

- the number of active antenna elements,

- the number of antenna panels, and

- TRP (Transmission and Reception Points).

This allows the base station to save energy. Consequently, the base station has the capability to adapt the hardware parameters to meet some requirements, such as traffic load and required coverage. In one exemplary implementation of the improved spatial-domain adaptation procedure, it is assumed that the base station adapts - in particular reduces - the number of active antenna elements. This may result in a different shape, pattern or number of beams that the base station can transmit.

From the UE perspective, the UE does not realize whether or not the base station changed the number of active antenna elements. However, since the changed number of antenna elements will affect the transmission properties, the UE(s) should be effectively informed about any relevant change in said respect.

Correspondingly, the UE is able to track the beams transmitted from the base station based on the SSBs and reference signals (such as the CSI-RS or TRS). As a result, the second solution includes two variants, wherein the first variant provides an improved SSB adaptation procedure, and the second variant provides an improved RS adaptation procedure. The first and second variants can be used separately or together.

For the following explanations, it is exemplarily assumed that the base station intends to reduce the number of active antenna elements to facilitate energy saving at the base station. However, the following explanations would apply correspondingly for a change of the number of antenna panels and/or TRPs.

The first variant of the second solution relates to an improved SSB adaptation procedure. Each UE is configured to operate according to a set of SSBs, called in the following cell-defining SSB (CD-SSB), which in one exemplary option can be configured using the SIB1 (System Information Block 1).

As mentioned above, the base station is responsible for changing the active antenna elements, which may result in the need to adapt the beams and furthermore the SSBs transmitted via the beams.

The resulting set of SSBs may differ from the previously-used set of SSBs (CD-SSBs) in various ways, e.g. the difference may involve one or more of

- a change in the number of SSBs transmitted as part of the set of SSBs,

- a change in the time or frequency at which some or all SSBs of the set of SSBs are transmitted,

- a change in the sequence used for the PSS / SSS of the set of SSBs,

- a change in the beam (SSB) indices,

- the transmission power with which the SSBs are transmitted,

- a power gap of the SSBs with respect to the CD-SSB,

- the radio resources of the PRACH (Physical Random Access Channel) associated with the SSBs of the set of SSBs.

Another possible difference is the channel raster used by the SSBs. In particular, the channel raster defines a subset of RF reference frequencies that can be used to identify the RF channel position in the uplink and downlink. In one exemplary 5G NR compliant implementation, there is according to 3GPP TS 38.104 v17.3.0, including sections 5.4.2 and 5.4.3:

- NR-ARFCN (New Radio - absolute radio-frequency channel number)

  ◦ Table 5.4.2.1-1: NR-ARFCN parameters for the global frequency raster

  ◦ Table 5.4.2.3-1: Applicable NR-ARFCN per operating band in FR1

  ◦ Table 5.4.2.3-2: Applicable NR-ARFCN per operating band in FR2

  ◦

- GSCN (Global Synchronization Raster Channel)

  ◦ Table 5.4.3.1-1: GSCN parameters for the global frequency raster

  ◦ Table 5.4.3.3-1: Applicable SS raster entries per operating band (FR1)

Table 5.4.3.3-2: Applicable SS raster entries per operating band (FR2)The base station thus may use different SSBs than before and needs to inform the UEs accordingly. To said end, the base station generates an SSB control signal, which indicates a target SSB pattern, comprising one or more SSBs out of a set of candidate SSBs, to be used by the UEs (and also used by the base station). The generated SSB control signal is transmitted from the base station to the UEs.

When the UE receives the SSB control signal indicating the target SSB pattern, the UE proceeds to operate according to this target SSB pattern, instead of according to the CD-SSB. Accordingly, the UE performs SSB-related functions based on the target SSB pattern, such as one or more of serving cell measurements, time synchronization, and frequency synchronization. The base station and UEs operate accordingly using the same SSBs, where the base station can save energy by using less antenna elements.

The base station is responsible for determining the SSBs of the target SSB pattern. The determination of the target SSB pattern by the base station can depend on different criteria, including the number of active antenna elements, the current traffic situation with the UEs in its radio cell, the intended amount of energy saving at the network side, or other criteria.

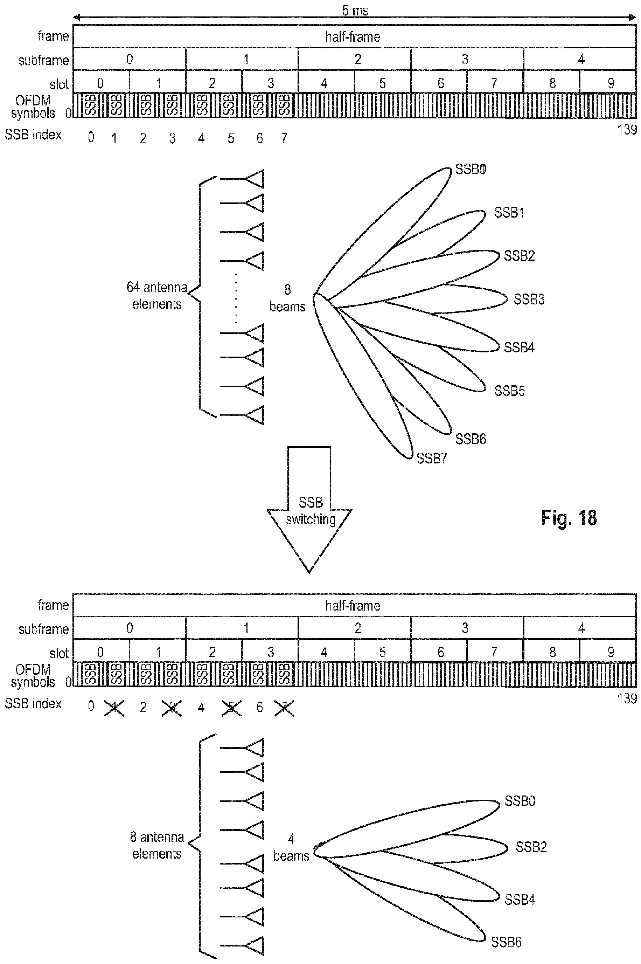

In one example, the number of beams is reduced from eight beams to four beams and accordingly the number of SSBs transmitted by the base station is reduced from eight SSBs to four SSBs. **Fig. 18** illustrates this in a simplified manner. At the top of Fig. 18, the CD-SSB is shown (see also Fig. 8), comprising 8 SSBs, which are correspondingly transmitted in a beam-sweeping manner using the 8 beams, transmitting one SSB per beam.

The base station changes its active antenna elements from 64 to 8, and as a result uses only four beams instead of eight beams. The base station thus also determines that less SSBs need to be transmitted, namely only four SSBs (still one SSB per beam). One example of the resulting beam patterns is illustrated at the bottom half, wherein out of all candidate SSBs, the target SSB pattern is composed of SSBs with the indexes, 0, 2, 4, and 6.

In the above, it was exemplarily assumed that the antenna elements were reduced, which then resulted in the change of SSBs and resulting SSB adaptation to use the target SSB pattern. However, the improved SSB adaptation procedure may also involve further changes to the SSBs, e.g. when the network energy saving functionality is to be reduced or stopped. Correspondingly, the base station in such a case can decide to use more antenna elements again, e.g. the same as before the SSB switching (or less or more).

According to one option, the SSB control signal according to the improved SSB adaptation procedure of the second solution can be used to re-configure the SSB pattern of the UE(s). In one example, the base station may determine yet another target SSB pattern, as explained above, and then provide the SSB control signal to the UE(s). In another example, the base station can decide to revert back to the original SSB pattern used before switching to the target SSB pattern. The SSB control signal could thus include a suitable trigger for each UE to revert back to the original SSB, e.g. the CD-SSB.

According to another option, the base station can use a legacy mechanisms (already defined in previous 5G NR standards) to instruct the UEs to revert back to the original SSB (e.g. the CD-SSB). Such a legacy mechanism could be to switch back to the CD-SSB.

As another example, the SSB adaptation procedure may also include the UE behaviour of reverting back to the original SSB, e.g. the CD-SSB, after a timer expires. The timer is triggered to count starting from the time the UE is indicated to use a new set of SSBs. The value of the timer can be configured by gNB through RRC configuration, MAC CE or DCI.

In the above, it was assumed that the target SSB pattern for operation is indicated to the UE through the use of the SSB control signal. The following exemplary variants relate to details on how the target SSB pattern can be indicated as part of the SSB control signal. In one exemplary variant, the target SSB pattern can be indicated by a suitable indicator included in the SSB control signal, wherein the SSB pattern indication can be in the form of a bitmap, with each bit being associated with one SSB out of the set of candidate SSBs and indicating whether the respective candidate SSB is transmitted or not. The number of bits for such a target SSB indication can be the same as the number of candidate SSBs of the SSB set from which the target SSB pattern can be determined by the base station. Such a solution is similar to the concept currently implemented in 5G NR compliant communications systems, as explained above, according to which an information element *ssb-PositionsInBurst* indicates the time domain positions of the transmitted SSBs as a bitmap.

According to another option, the target SSB indicator can be in the form of an index, which points to entries of different previously-configured candidate SSB patterns. These candidate SSB patterns can be configured by the base station in advance using suitable SSB configuration signaling. Correspondingly, different candidate SSB patterns can be defined, with corresponding SSB pattern IDs. The base station determines one among the different candidate SSB patterns and generates the SSB control signal to include that SSB pattern ID that corresponds to the determined target SSB pattern. The UE in turn can determine from the received SSB pattern ID the corresponding target SSB pattern among the various previously-configured SSB patterns.

The following variants relate to how the SSB control signal itself can be implemented. Generally, the SSB control signal can be implemented in the same or similar as the BWP control signal, e.g. signal can be a downlink control information, DCI, message. According to one option, a new DCI message can be defined, not yet defined in the 3GPP 5G standards, which includes a suitable field to carry the target SSB pattern indication.

Another option is to reuse an already existing DCI message to carry the SSB control signal. For instance, the existing DCI message could be

- a DCI message for paging,

- a DCI message for notifying one or more of a slot format and search space set group switching, for example a DCI message having the same or similar format as the DCI format 2_0 mentioned above for 3GPP 5G compliant communication systems,

- a DCI message for notifying power saving information, for example a DCI message having the same or similar format as the DCI format 2_6 mentioned above for 3GPP 5G compliant communication systems,

- a DCI message for notifying one or more of whether to start monitoring a paging early control signal and of whether a reference signal is available, for example a DCI message having the same or similar format as the DCI format 2_7 mentioned above for 3GPP 5G compliant communication systems.

When reusing such an existing DCI message, a new field can be added or an already existing field can be reused to carry the target SSB pattern indication.

Alternatively, the SSB control signal can be a message of the Radio Resource Control, RRC, protocol.

According to still another alternative, the SSB control signal can be implemented as a control element of the Medium Access Control, MAC, protocol.

Furthermore, as was explained above, the SSB control signal transmitted by the base station can be either common to a cell or common to a group of UEs.

According to a first exemplary variant, the SSB control signal can be addressed to an identifier that is common to a complete radio cell, such that all UEs that are located in that radio cell will determine that the SSB control signal is intended for them and will proceed to process the SSB control signal. In one example, it may be assumed that the SSB control signal is a DCI message, in which case a cell-common identifier (e.g. RNTI) can be used for scrambling the DCI message. According to a second exemplary variant, the SSB control signal can be addressed to an identifier that is common to a group of UEs. Each UE in the group knows the group identifier, such that the UE will determine that the SSB control signal is intended for it and will proceed to process the SSB control signal. In one example, it may be assumed that the SSB control signal is a DCI message, in which case a UE-group-common identifier (e.g. RNTI) can be used for scrambling the DCI message.

According to a third exemplary variant, the SSB control signal can be addressed to a group of UEs by including several blocks of information, wherein each information block is destined for one or more UEs. Correspondingly, a UE is informed with which information block it is associated, and then, when receiving the SSB control signal, each UE can read the corresponding information block. According to one example, the SSB control signal can be a DCI message, e.g. having the same or similar format as DCI format 2_6 described above in connection with the 3GPP implementation.

As explained above, one variant of the SSB adaptation procedure allows to implement a UE-group-common SSB signal. The following description relates to details on how the base station determines the group of UEs to which to address the SSB control signal.

For instance, for some of the UEs served by a particular TRP, antenna panel, or a group of antenna elements, which the gNB decides to change, activate or deactivate later on by traffic adaptation for energy saving, these UEs would be selected by gNB to indicate the SSB adaptation by a UE - group-common SSB signal, as they will be under influence as the consequence of gNB operation.

The second variant of the second solution relates to an improved reference signal adaptation procedure. Each UE is configured to operate based on certain reference signals, in this exemplary case one or more of the CSI-RS and TRS. A set of CSI-RS and a set of TRS are configured for each UE, which can use these reference signals to perform reference-signal-related functions, such as channel state measurements, interference measurements, beam management, time tracking, and frequency tracking.

As already explained for the above first SSB variant of the second solution, the base station is responsible for changing the active antenna elements, which may result in the need to adapt the beams and furthermore the reference signals (e.g. CSI-RS and TRS) transmitted via the beams. The resulting reference signals may differ from the previously-used reference signals in various ways, e.g. one or more of the following parameters:

- time radio resources,

- frequency radio resources,

- a sequence of the reference signal,

- a scrambling ID,

- Quasi Co Location, QCL, references,

- a transmission power gap compared to a reference synchronization signal block.

The scrambling ID mentioned above can be used e.g. to scramble the RS sequence values to generate the complex value sequence that is actually transmitted, so as to randomize the transmitted signal to reduce the interference to neighboring cells.

The base station thus may use different reference signals than before and needs to inform the UEs accordingly. To said end, the base station generates an RS control signal, which indicates a target configuration of reference signals to be used by the UE (and also used by the base station). The generated RS control signal is transmitted from the base station to the UEs.

When the UE receives the RS control signal indicating the target RS configuration, the UE proceeds to operate according to this indicated target RS configuration, instead of continuing to use the previous reference signal configuration. Correspondingly, the UE performs reference signal related functions based on the indicated target RS configuration, such as one or more of channel state measurements, interference measurements, beam management, time tracking and frequency tracking. The base station and UEs operate accordingly using the same RS configuration, determined by the base station so as to save energy and as the result of using less antenna elements.

The base station is responsible for determining the target RS configuration. This determination of the target RS configuration by the base station can depend on different criteria, as already explained above with regard to the target SSB pattern, such as including the number of active antenna elements, the current traffic situation with the UEs in its radio cell, the intended amount of energy saving at the network side as well as other criteria.

In the above, it was exemplarily assumed that the antenna elements were reduced, which then resulted in the change of RS configuration. However, the improved RS adaptation procedure may also involve further changes to the reference signal, e.g. when the network energy saving functionality is to be reduced or stopped. Correspondingly, the base station in such a case can decide to use more antenna elements again, e.g. the same as before the RS switching (or less or more).

According to one option, the RS control signal according to the improved RS adaptation procedure of the second solution can be used to re-configure the reference signals of the UE(s). In one example, the base station may determine yet another target RS target configuration, as explained above, and then provide the RS control signal to the UE(s). In another example, the base station can decide to revert back to the original RS configuration used before switching to the target RS configuration. The RS control signal could thus include a suitable trigger for each UE to revert back to the original RS configuration.

According to another option, the base station can use a legacy mechanisms (already defined in previous 5G NR standards) to instruct the UEs to revert back to the original RS configuration. Such a legacy mechanism could be based on RRC messages, such that the UEs follow the RS configuration of the RRCAccording to still another example, the RS adaptation procedure may also involve the UE behaviour of reverting back to the original RS configuration, after a timer expires. The timer is triggered to count starting from the time the UE is indicated to use the target RS configuration. The value of the timer can be configured by the gNB through RRC, configuration, MAC CE or DCI.

In the above, it was assumed that the target RS configuration for operation is indicated to the UE through the use of the RS control signal. The following exemplary variants relate to details on how the target RS configuration can be indicated as part of the RS control signal. In one exemplary variant, the target RS configuration indicator can be in the form of an index, which points to entries of different previously-configured candidate RS configurations. These candidate RS configuration can be configured by the base station in advantage using suitable RS configuration signaling. Correspondingly, different candidate RS configurations can be defined, with corresponding RS configuration IDs. The determines one among the different candidate RS configurations and generates the RS control signal to include that RS configuration ID that corresponds to the determined target RS configuration. The UE in turn can determine from the received RS configuration ID the corresponding RS configuration among the various previously-configured RS configurations.

The following variants relate to how the RS control signal itself can be implemented. Generally, the RS control signal can be implemented in the same or similar as the SSB control signal, e.g. signal can be a downlink control information, DCI, message. According to one option, a new DCI message can be defined, not yet defined in the 3GPP 5G standards, which includes a suitable field to carry the target RS configuration indication.

Another option is to reuse an already existing DCI message to carry the RS control signal. For instance, the existing DCI message could be

- a DCI message for paging,

- a DCI message for notifying one or more of a slot format and search space set group switching, for example a DCI message having the same or similar format as the DCI format 2_0 mentioned above for 3GPP 5G compliant communication systems,

- a DCI message for notifying power saving information, for example a DCI message having the same or similar format as the DCI format 2_6 mentioned above for 3GPP 5G compliant communication systems,

- a DCI message for notifying one or more of whether to start monitoring paging control signal and of whether a reference signal is available, for example a DCI message having the same or similar format as the DCI format 2_7 mentioned above for 3GPP 5G compliant communication systems.

When reusing such an existing DCI message, a new field can be added or an already existing field can be reused to carry the target RS configuration indication.

Alternatively, the RS control signal can be a message of the Radio Resource Control, RRC, protocol.

According to still another alternative, the RS control signal can be implemented as a control element of the Medium Access Control, MAC, protocol.

Furthermore, as was explained above, the RS control signal transmitted by the base station can be either common to a cell or common to a group of UEs.

According to a first exemplary variant, the RS control signal can be addressed to an identifier that is common to a complete radio cell, such that all UEs that are located in that radio cell will determine that the RS control signal is intended for them and will proceed to process the RS control signal. In one example, it may be assumed that the RS control signal is a DCI message, in which case a cell-common identifier (e.g. RNTI) can be used for scrambling the DCI message.

According to a second exemplary variant, the RS control signal can be addressed to an identifier that is common to a group of UEs. Each UE in the group knows the group identifier, such that the UE will determine that the RS control signal is intended for it and will proceed to process the RS control signal. In one example, it may be assumed that the RS control signal is a DCI message, in which case a UE-group-common identifier (e.g. RNTI) can be used for scrambling the DCI message.

According to a third exemplary variant, the RS control signal can be addressed to a group of UEs by including several blocks of information, wherein each information block is destined for one or more UEs. Correspondingly, a UE is informed with which information block it is associated, and then, when receiving the RS control signal, each UE can read the corresponding information block. According to one example, the RS control signal can be a DCI message, e.g. having the same or similar format as DCI format 2_6 described above in connection with the 3GPP implementation.

As explained above, one variant of the RS adaptation procedure allows to implement a UE-group-common RS signal. The following description relates to details on how the base station determines the group of UEs to which to address the RS control signal.

For instance, for some of the UEs served by a particular TRP, antenna panel, or a group of antenna elements, which the gNB decides to change, activate or deactivate later on by traffic adaptation for energy saving, these UEs would be selected by gNB to indicate the RS adaptation by a UE - group-common SSB signal, as they will be under influence as the consequence of gNB operation.

*Third solution - time domain adaptation*

According to this third solution, network energy saving is facilitated by adapting the time-domain operation between the UE and the base station, in particular by defining blank time periods during which the UE is allowed to skip some communication operation. This improved time-domain adaptation procedure is under control of the base station, which is responsible to determine the blank time periods during which the UE and base station are allowed to skip certain communication with each other, e.g. one or more of downlink communication and uplink communication.

From the base station perspective, the base station is thus allowed to not receive uplink communication from the UE(s) and to no transmit downlink communication to the UE(s) in its cell. From the UE perspective, the UE is allowed to not receive downlink communication from the base station and to not transmit uplink communication to the base station.

The base station can take into account certain requirements (such as the current traffic) when determining the blank time periods and also when determining whether the energy saving is to be achieved by skipping downlink communication (called in the following DL blank time periods) or skipping uplink communication (called in the following UL blank time periods) or skipping both uplink and downlink communication (called in the following UL+DL blank time periods).

Other alternatives of the wording "blank" can be skipping, sleeping, low-activity, or light.

In addition to the energy saving advantage facilitated by the third solution at the UE and base station side, avoiding uplink transmissions from the UE may allow to reduce interference caused by the UE, and, conversely, avoiding downlink transmissions from the base station may allow to reduce interference caused by the base station.

As a result of those blank time periods, the base station and UE can switch off hardware circuits or relax processing timelines to save energy. For instance, the base station and UE can deactivate some or all of the radio frequency (RF) and/or baseband modules to save network energy during those blank time periods.

The base station is responsible for determining the blank time periods and whether the blank time periods relate to downlink, uplink or both uplink and downlink. This determination by the base station can be based on certain criteria, such as the current traffic with the UEs in its radio cell, the intended amount of energy saving at the network side, or other criteria.

After having determined the suitable blank time periods, the base station can generate a suitable blank-time control signal indicating the determine blank time periods and transmit same to the UEs. The UE, when receiving the blank-time control signal, determines the instructed blank time periods and then operates according to these determined blank time periods. For instance, both the UE and base station behave accordingly during the instructed blank time periods, e.g. the UE does not transmit in the uplink while the base station does not expect any reception in the uplink from the UE, or the base station does not transmit in the downlink while the UE does not expect any reception in the downlink from the base station.

The time periods can be of a different type, e.g. the time periods may span one or more time slots of a subframe, or may span one or more OFDM symbols of a time slot, or may span one or more subframes of a frame, or may span one or more frames, or may be defined as a time duration (e.g. in ms). The time period may be a one-time time period, in the sense that it is applied only once in response to receiving the blank-time control signal. In said case, the blank-time control signal could simply indicate a time duration, such as a value of ms. This one-time time period can starts at a particular (pre-defined) time after receiving the control signal, and ends correspondingly after the time period ends.

Alternatively, the time period may be periodic, in the sense that it is applied repetitively with a certain periodicity in response to receiving the blank-time control signal. In said case, the blank-time control signal could indicate the time duration (e.g. a value of ms) and the periodicity.

According to still a further option, the blank time periods follow a blank-time period pattern, which is indicated by the blank-time control signal. In particular, a plurality of different blank-time period patterns can be defined by the base station in advance using suitable configuration signaling. For instance, a blank-time period pattern can define a series of spaced-apart time periods, each time period being either a DL, UL or DL+UL blank time period). Correspondingly, different blank-time period patterns can be defined and respectively associated with a blank-time period pattern ID. The base station can generate the blank-time control signal by including the blank-time period pattern ID of the determined blank-time period pattern. The UE in turn can determine from the received blank-time control signal, the ID and thus the blank-time period pattern among the plurality.

A further exemplary option relates to the use of a slot format indicator as part of the blank-time control signal. The slot format indicator indicates a particular slot format, which is then interpreted by the UE and the base station in a suitable manner to indicate blank-time periods. In particular, a slot format defines how each OFDM symbol of a slot is to be used.

According to a first exemplary implementation, the slot format differentiates each OFDM symbol as being either for downlink, uplink or flexible, wherein flexible can mean either uplink or downlink. In this case, the flexible OFDM symbols could be re-interpreted as blank time periods. Correspondingly, when such a slot format is applied between the UE and the base station, each "flexible" OFDM symbol of the slots are used as blank time periods to save energy. Alternatively, not all "flexible" OFDM symbols of the slots are used as blank time periods, but only some of them, e.g. the first two flexible OFDM symbols.

According to another second exemplary implementation, the slot format differentiates each OFDM symbols as being either for downlink, uplink, flexible or blank. Correspondingly, a new type of OFDM symbol is introduced by this implementation, wherein this new blank type of OFDM symbol can be interpreted as meaning that neither uplink nor downlink communication is expected to occur during these blank OFDM symbols.

In either of the two implementations, different slot formats are defined in advance, being associated with suitable slot format IDs. The base station can decide on a slot format and includes in the blank-time control signal the associated slot format ID. The UE in turn can determine from the received slot format ID, the slot format and thus the blank-time periods.

In 5G NR compliant communication systems, as explained above, the slot format is indicated using a DCI format 2_0. In one variation, a similar or the same DCI format 2_0 can be used as the blank-time control signal.

In the above, it was exemplary assumed that the time-domain operation is limited to facilitate network energy saving. Some of the above implementations have a limit as to until when they are applied, e.g. the one-time blank time period.

However, for other implementations it might be advantageous to allow a mechanism to switch back to a normal operation, e.g. when the network energy saving functionality is to be reduced or stopped. To said end, in one option, a suitable stop signal can be transmitted by the base station to the UEs.

Alternatively, the blank-time control signal may already include suitable information, such as a maximum time during which the blank-time periods are to be applied.

According to still another alternative, the base station may transmit e.g. another slot format indicator to disable the current slot format and rather instruct the UE to operate according to another slot format with less or no blank time periods.

The following exemplary variants relate to how the blank-time control signal itself can be implemented. Generally, the blank-time control signal can be a downlink control information, DCI, message. According to one option, a new DCI message can be defined, not yet defined in the 3GPP 5G standards, which includes a suitable field to carry the blank-time period indication.

Another option is to reuse an already existing DCI message to carry the blank-time period indication. For instance, the existing DCI message could be

- a DCI message for paging,

- a DCI message for notifying one or more of a slot format and search space set group switching, for example a DCI message having the same or similar format as the DCI format 2_0 mentioned above for 3GPP 5G compliant communication systems,

- a DCI message for notifying power saving information, for example a DCI message having the same or similar format as the DCI format 2_6 mentioned above for 3GPP 5G compliant communication systems,

- a DCI message for notifying one or more of whether to start monitoring a paging early control signal and of whether a reference signal is available, for example a DCI message having the same or similar format as the DCI format 2_7 mentioned above for 3GPP 5G compliant communication systems.

When reusing such an existing DCI message, a new field can be added or an already existing field can be reused to carry the blank-time period indication.

Alternatively, the blank-time control signal can be a message of the Radio Resource Control, RRC, protocol.

According to still another alternative, the blank-time control signal can be implemented as a control element of the Medium Access Control, MAC, protocol.

Furthermore, as was explained above, the blank-time control signal transmitted by the base station can be either common to a cell or common to a group of UEs.

According to a first exemplary variant, the blank-time control signal can be addressed to an identifier that is common to a complete radio cell, such that all UEs that are located in that radio cell will determine that the blank-time control signal is intended for them and will proceed to process the blank-time control signal. In one example, it may be assumed that the blank-time control signal is a DCI message, in which case a cell-common identifier (e.g. RNTI) can be used for scrambling the DCI message.

According to a second exemplary variant, the blank-time control signal can be addressed to an identifier that is common to a group of UEs. Each UE in the group knows the group identifier, such that the UE will determine that the blank-time control signal is intended for it and will proceed to process the blank-time control signal. In one example, it may be assumed that the blank-time control signal is a DCI message, in which case a UE-group-common identifier (e.g. RNTI) can be used for scrambling the DCI message.

According to a third exemplary variant, the blank-time control signal can be addressed to a group of UEs by including several blocks of information, wherein each information block is destined for one or more UEs. Correspondingly, a UE is informed with which information block it is associated, and then, when receiving the blank-time control signal, each UE can read the corresponding information block. According to one example, the blank-time control signal can be a DCI message, e.g. having the same or similar format as DCI format 2_6 described above in connection with the 3GPP implementation.

As explained above, one variant of the time-domain solution allows to implement a UE-group-common blank-time control signal. The following description relates to details on how the base station determines the group of UEs to which to address the blank-time control signal.

As an example, for traffic adaptation, gNB estimates that the DL or UL traffic of some of the UEs will not come or will not be scheduled even if traffic comes. Then, the gNB may indicate this group of UEs to perform the above mentioned time domain adaptation by the control signal.

Another example is that the gNB may decide to switch off or deactivate some of its TRPs, antenna panels, antenna elements for either DL transmission, or UL reception or both. Then, the gNB may indicate the group of UEs served by these TRPs, antenna panels or elements to perform the above mentioned adaptation by the control signal.

*Fourth solution - downlink control channel adaptation*

According to this fourth solution, network energy saving is facilitated by adapting the downlink-control-channel related operation between the UE and the base station. This improved downlink control channel adaptation procedure is under control of the base station, which is responsible to determine how the downlink control channel (e.g. PDCCH) operation between the UE and base station is to be performed.

Two separate mechanisms are provided by the fourth solution, wherein the first mechanism is the possibility to skip the downlink control channel operation for a duration of time at the base station and the UE. The second mechanism is the possibility to switch the search space set group related to the downlink control channel monitoring.

The downlink control channel adaptation procedure involves that the base station transmits a corresponding control signal (called in the following PDCCH-adaptation control signal), which can be common to all UEs in its radio cell or common to a group of UEs. The PDCCH-adaptation control signal indicates to the UE to perform one or both of the two mechanisms.

According to the first mechanism of this fourth solution (called in the following PDCCH-skipping mechanism), the base station need not transmit control data in the downlink control channel to any UE in its radio cell or to a group of UEs for a duration of time and thus may save energy. The UE in turn need not monitor the downlink control channel for said duration of time and thus may also save energy.

Correspondingly, the PDCCH-adaptation control signal can include a suitable indication as to whether and for which duration of time the PDCCH can be skipped by the UE and base station, e.g. when the gNB decides to go into a sleep mode for a certain duration.

The base station determines whether the PDCCH skipping mechanism is to be applied and may also determine the duration of time.

According to the second mechanism of this fourth solution (called in the following SSS-group switching mechanism), the group of search space sets currently used by the UE for monitoring the PDCCH is changed to another target SSS group. This target SSS group can be defined so as to allow network energy saving at the base station side, e.g. by defining long(er) periods of time during which the UE is not required to monitor the PDCCH during a slot. To said end, a corresponding set of SSS groups, suitable for facilitating network energy saving, are defined in advance by the base station and informed to the UE. Each SSS group in the set could be associated with an SSS group ID. The PDCCH-adaptation control signal can then include a suitable indication with an SSS group ID as to which SSS group the UE is to use.

The base station determines the target SSS group to be used and generates the corresponding SSS group indication for the PDCCH-adaptation control signal.

The following exemplary variants relate to how the PDCCH-adaptation control signal itself can be implemented. Generally, the PDCCH-adaptation control signal can be a downlink control information, DCI, message. According to one option, a new DCI message can be defined, not yet defined in the 3GPP 5G standards, which includes a suitable field to carry the PDCCH-skipping indication and the SSS group indication.

Another option is to reuse an already existing DCI message to carry the PDCCH-adaptation control signal. For instance, the existing DCI message could be

- a DCI message for paging,

- a DCI message for notifying one or more of a slot format and search space set group switching, for example a DCI message having the same or similar format as the DCI format 2_0 mentioned above for 3GPP 5G compliant communication systems,

- a DCI message for notifying power saving information, for example a DCI message having the same or similar format as the DCI format 2_6 mentioned above for 3GPP 5G compliant communication systems,

- a DCI message for notifying one or more of whether to start monitoring a paging early control signal and of whether a reference signal is available, for example a DCI message having the same or similar format as the DCI format 2_7 mentioned above for 3GPP 5G compliant communication systems.

When reusing such an existing DCI message, a new field can be added or an already existing field can be reused to carry the PDCCH-skipping indication and the target SSS group indication.

Alternatively, the PDCCH-adaptation control signal can be a message of the Radio Resource Control, RRC, protocol.

According to still another alternative, the PDCCH-adaptation control signal can be implemented as a control element of the Medium Access Control, MAC, protocol.

Furthermore, as was explained above, the PDCCH-adaptation control signal transmitted by the base station can be either common to a cell or common to a group of UEs.

According to a first exemplary variant, the PDCCH-adaptation control signal can be addressed to an identifier that is common to a complete radio cell, such that all UEs that are located in that radio cell will determine that the PDCCH-adaptation control signal is intended for them and will proceed to process the PDCCH-adaptation control signal. In one example, it may be assumed that the PDCCH-adaptation control signal is a DCI message, in which case a cell-common identifier (e.g. RNTI) can be used for scrambling the DCI message.

According to a second exemplary variant, the PDCCH-adaptation control signal can be addressed to an identifier that is common to a group of UEs. Each UE in the group knows the group identifier, such that the UE will determine that the PDCCH-adaptation control signal is intended for it and will proceed to process the PDCCH-adaptation control signal. In one example, it may be assumed that the PDCCH-adaptation control signal is a DCI message, in which case a UE-group-common identifier (e.g. RNTI) can be used for scrambling the DCI message.

According to a third exemplary variant, the PDCCH-adaptation control signal can be addressed to a group of UEs by including several blocks of information, wherein each information block is destined for one or more UEs. Correspondingly, a UE is informed with which information block it is associated, and then, when receiving the PDCCH-adaptation control signal, each UE can read the corresponding information block. According to one example, the PDCCH-adaptation control signal can be a DCI message, e.g. having the same or similar format as DCI format 2_6 described above in connection with the 3GPP implementation.

In current 5G NR standards, there are other mechanisms that allow to instruct PDCCH skipping and SSS group switching, although the corresponding signaling is UE-specific, rather than cell/ UE-group common as explained above for the PDCCH-adaptation control signal of the fourth solution. In one exemplary variant of the fourth solution, the priority of the UE-specific mechanism for PDCCH skipping and SSS group switching have a higher priority than the corresponding cell /UE-group common PDCCH adaptation of the fourth solution.

Alternatively, the UE, when being instructed by both a UE-specific mechanism (for PDCCH skipping or SSS group switching) and the cell / UE-group common mechanism, does not expect any inconsistent operation. If such inconsistent operation would occur, then the UE detects this error case, and may e.g. only operate according to one instruction, e.g. the UE-specific or cell / UE-group common instruction.

*Fifth solution - combination of previous solutions*

In the above, the four solutions (and its variations) were described separately and independently from one another. According to this fifth solution, two, more or all of the four solutions are combined and implemented together, so as to achieve synergetic effects.

In particular, the four solutions provide the following five different control signals: the BWP control signal, the SSB control signal, the RS control signal, the blank-time control signal and the PDCCH-adaptation control signal.

These control signals are transmitted to adapt the corresponding operation between the UE and base station.

A combination of two or more, as well as a combination of all the control signals into one and the same message is possible.

As an example, the BWP control signal can be combined with one or more of the remaining SSB control signal, RS control signal, the blank-time control signal and the PDCCH-adaptation control signal. As another example, the SSB control signal can be combined with one or more of the remaining BWP control signal, RS control signal, the blank-time control signal and the PDCCH-adaptation control signal. And so on.

As a result, the combined message would include several indications, among the target BWP indication, the SSB pattern indication, the RS configuration indication, the blank-time-period indication, the PDCCH-skipping indication and the SSS group indication.

Correspondingly, the network energy saving can be increased by applying more than one network energy saving mechanism, while allowing an efficient instruction that causes only limited overhead through the use of the one combined message.

In one exemplary implementation of the fifth solution, when assuming that cell-common types of the five control signals are used, two or more of these five cell-common control signals can be combined, considering that they are addressed in the same manner.

On the other hand, in case control signals that are common to a UE group are to be used, the combined control signal message is to be addressed to the same UE group. Correspondingly, the base station can determine which of the five control signals can be combined into one message, depending on the intended UE group. The advantage of combination is to save control overhead. Also, reusing some of the existing signalling/procedure framework, e.g. BWP framework, leads to low standard specification impact and makes the implementation/develop of base station and UE less complex.

In one exemplary implementation, the BWP control signal also implicitly indicates the SSB set, and or time domain adaptation, which is part of the configuration within the RRC configuration of BWP. When UE switches to a target BWP, the corresponding SSB, or time domain adaptation can be also applied as per the configuration associated with the target BWP.

*Further Aspects*

According to a first aspect, a user equipment, is provided that includes the following. A receiver of the UE receives, from a base station, a first control signal that is common to a radio cell or to a group of UEs, to which the UE belongs, wherein the first control signal indicates a target bandwidth part, BWP, for operation. Processing circuitry of the UE operates according to the indicated target BWP.

According to a second aspect provided in addition to the first aspect, the processing circuitry determines a currently-active BWP and switches from the determined currently-active BWP to the indicated target BWP, in case the determined currently-active BWP is different from the indicated target BWP. In an optional implementation, the processing circuitry performs BWP-related functions based on the target BWP. Further optionally, the BWP-related functions include one or more of a random access procedure, measurements, and monitoring of a downlink control channel.

According to a third aspect provided in addition to the first or second aspect, the target BWP is one of:

- a default BWP configured at the UE,
- an initial BWP configured at the UE,
- a dormant BWP configured at the UE,
- a first non-dormant BWP configured at the UE,
- a common BWP configured at the UE, the common BWP being common to all UEs in the radio cell of the base station or common to the group of UEs.

The target BWP has a smaller, larger or the same frequency bandwidth than the currently-active BWP

According to a fourth aspect provided in addition to one of the first to fourth aspects, the first control signal indicating the target BWP for operation is one of:

- a downlink control information, DCI, message, optionally including one of

  - a DCI message for paging,
  - o a DCI message for notifying one or more of a slot format and search space set group switching, for example a DCI message having a format of a DCI format 2_0 of a 3GPP communication system,
  - o a DCI message for notifying power saving information, for example a DCI message having a format of a DCI format 2_6 of a 3GPP communication system,
  - o a DCI message for notifying one or more of whether to start monitoring paging control signal and of whether a reference signal is available, for example a DCI message having a format of a DCI format 2_7 of a 3GPP communication system,

- a message of the Radio Resource Control, RRC, protocol, and

a control element of the Medium Access Control, MAC, protocol.

According to a fifth aspect, provided in addition to one of the first to fourth aspects, the first control signal indicates the target BWP for operation, based on a target BWP indicator, that has one or more bits and identifies the target BWP out of a set of BWPs. In an optional implementation, the receiver receives a BWP configuration signal for configuring the set of BWPs.

According to a sixth aspect, provided in addition to one of the first to fifth aspects, the first control signal that is common to a group of UEs, includes a plurality of blocks of information, where the UE is associated with at least one of the plurality of blocks of information. The processing circuitry determines that block of information that is associated with the UE. In an optional implementation, the first control signal is a downlink control information message having a format of DCI format 2_6 of a 3GPP communication system.

Alternatively, the first control signal that is common to a group of UEs is addressed to an identifier that is associated with the group of UEs. The first control signal that is common to a radio cell is addressed to an identifier that is common to a complete radio cell.

According to a seventh aspect provided in addition to one of the first to sixth aspects, the receiver receives, from the base station, a second control signal that is common to the radio cell or to the group of UEs, to which the UE belongs. The second control signal indicates a target synchronization signal block, SSB, pattern, comprising one or more SSBs out of a set of candidate SSBs, to be used by the UE. The processing circuitry performs SSB-related functions based on the target SSB pattern indicated by the second control signal. In an optional implementation, the SSB-related functions include one or more of serving cell measurements, time synchronization, and frequency synchronization.

According to an eighth aspect provided in addition to seventh aspect, the second control signal includes an SSB pattern indication to indicate the target SSB pattern. The SSB pattern indication is in the form of a bitmap, with each bit being associated with one candidate SSB out of the set of candidate SSBs and indicating whether the respective candidate SSB is transmitted or not. In an optional implementation, each of the one or more candidate SSBs to be used by the UE is defined by one or more of the following parameters:

- a time-domain periodicity and offset of the candidate SSB,
- a sequence used for a synchronization signal of the candidate SSB,
- a beam index of the candidate SSB,
- a transmission power of the candidate SSB,
- a transmission power gap between the candidate SSB compared to a cell-defining SSB, and
- radio resources of a Physical Random Access Channel associated with the candidate SSB,
- a channel raster of the candidate SSB.

According to a ninth aspect provided in addition to any one of the first to eight aspects, the receiver receives, from the base station, a third control signal that is common to the radio cell or to the group of UEs, to which the UE belongs. The third control signal indicates a target configuration of one or more reference signals to be used by the UE out of a set of reference signal configurations. The reference signals are one or more of a channel state information, CSI, reference signal and a tracking reference signal, TRS. In an optional implementation, the processing circuitry performs reference-signal-related functions based on the indicated target reference signal configuration. In an optional implementation, the reference-signal-related functions include one or more of channel state measurements, interference measurements, beam management, time tracking, and frequency tracking.

According to a tenth aspect provided in addition to the eighth aspect, the third control signal includes a reference signal configuration indication. The target reference signal configuration indication is in the form of an index pointing to one reference signal configuration out of a plurality of reference signal configurations.

In an optional implementation, each set of reference signal configurations is defined by one or more of the following parameters:

- time radio resources,
- frequency radio resources,
- a sequence of the reference signal,
- a scrambling ID,
- Quasi Co Location, QCL, references,
- a transmission power gap compared to a reference synchronization signal block.

According to an eleventh aspect provided in addition to any one of the first to tenth aspects the receiver receives, from the base station, a fourth control signal that is common to a radio cell or to a group of UEs, to which the UE belongs. The fourth control signal indicates one or more (blank) time periods during which the UE is allowed to skip one or more of receiving downlink communication from the base station and transmitting uplink communication to the base station. In an optional implementation, the one or more (blank) time periods are defined in terms of time slots of a subframe, or in terms of OFDM symbols of a time slot, or in terms of subframes of a frame, or in terms of frames, or in terms of a time duration.

According to a twelfth aspect provided in addition to the eleventh aspect, the fourth control signal indicates one (blank) time period and indicates a time duration of the one (blank) time period. The one (blank) time period begins at a time after receiving the fourth control signal and stops after the time duration of the one (blank) time period ends. In an optional implementation, the one time period is applied periodically with a time periodicity.

Alternatively, the fourth control signal indicates a pattern of (blank) time periods out of a plurality of (blank) time period patterns. In an optional implementation thereof, the receiver receives a (blank) time period pattern configuration signal to configure the plurality of (blank) time period patterns.

According to a thirteenth aspect, provided in addition to the eleventh aspect, the fourth control signal includes a slot format indicator, SFI. The processing circuitry determines the indicated one or more (blank) time periods based on a value of the included SFI and an association between different slot format definitions and different SFI values. The slot format defines how each OFDM symbol of a slot is to be used. In an optional implementation thereof,

- the slot format defines each OFDM symbol of a slot as being a downlink, an uplink or a flexible OFDM symbol, and wherein the processing circuitry, when in operation, determines that some or each flexible OFDM symbol is one of the (blank) time periods, or
- the slot format defines each OFDM symbol of a slot as being a downlink, an uplink, a flexible or a (blank) OFDM symbol during which the UE is allowed to skip one or more of receiving downlink communication from the base station and transmitting uplink communication to the base station, and wherein the processing circuitry, when in operation, determines that each (blank) OFDM symbol during which the UE is allowed to skip one or more of receiving downlink communication from the base station and transmitting uplink communication to the base station is one of the (blank) time periods.

According to a fourteenth aspect, provided in addition to any one of the first to thirteenth aspects, the receiver, when in operation, receives, from the base station, a fifth control signal that is common to the radio cell or to the group of UEs, to which the UE belongs, wherein the fifth control signal indicates to the UE to perform one or both of:

- skip monitoring a downlink control channel for a period of time, and

- switch to a target search space set group, indicated in the fifth control signal,

optionally wherein the fifth control signal has a lower priority than another control signal that is specific to the UE and that indicates to perform one of skip monitoring the downlink control channel and of switch to a target search space set group.

According to a fifteenth aspect, provided in addition to the first, seventh, ninth, eleventh and fourteenth aspects, any combination of two or more of the first to fifth control signals is transmitted by the base station in a same message to the UE.

According to a sixteenth aspect, provided in addition to the first, seventh, ninth, eleventh and fourteenth aspects, for any one or more of the first to fifth control signals is a high-layer signal of one out of a Medium Access Control; MAC, Control Element, a Radio Resource Control, RRC, message addressed to one or more UEs, and a system information broadcast message. According to a seventeenth aspect, a method is provided comprising the following steps performed by a user equipment, UE:

   receiving, from a base station, a first control signal that is common to a radio cell or to a group of UEs, to which the UE belongs, wherein the first control signal indicates a target bandwidth part, BWP, for operation,

   operating according to the indicated target BWP.

According to a eighteenth aspect, a base station is provided comprising the following. A processing circuitry of the base station determines a target bandwidth part, BWP, for operation. A transmitter of the base station transmits, to all UEs in the radio cell or to a group of UEs, a first control signal. The first control signal is common to the radio cell or to the group of UEs and indicates the target BWP. The processing circuitry operates according to the indicated target BWP.

According to a nineteenth aspect, provided in addition to the eighteenth aspect, the processing circuitry, determines as the target BWP one of:

- a default BWP configured at the UE,
- an initial BWP configured at the UE,
- a dormant BWP configured at the UE,
- a first non-dormant BWP configured at the UE,
- a common BWP configured at the UE, the common BWP being common to all UEs in the radio cell of the base station or common to the group of UEs.

According to a 20th aspect, provided in addition to the eighteenth or nineteenth aspect, the first control signal indicates the target BWP for operation, based on a target BWP indicator, that has one or more bits and identifies the target BWP out of a set of BWPs. In an optional implementation, the transmitter transmits a BWP configuration signal for configuring the set of BWPs.

According to a 21st aspect, provided in addition to any one of the eighteenth to 20th aspect, the processing circuitry determines a target synchronization signal block, SSB, pattern. The transmitter transmits, to all UEs in the radio cell or to a group of UEs, a second control signal. The second control signal is common to the radio cell or to the group of UEs indicates the target SSB pattern, which comprises one or more SSBs out of a set of candidate SSBs, to be used by the UE and the base station. The processing circuitry performs SSB-related functions based on the target SSB pattern indicated by the second control signal.

According to a 22nd aspect, provided in addition to the 21st aspect, the second control signal includes an SSB pattern indication to indicate the target SSB pattern. The SSB pattern indication is in the form of a bitmap, with each bit being associated with one candidate SSB out of the set of candidate SSBs and indicating whether the respective candidate SSB is transmitted or not.

According to a 23rd aspect, provided in addition to any one of the eighteenth to 22nd aspects, the processing circuitry determines a target configuration of one or more reference signals to be used by the UE and the base station. The transmitter transmits, to all the UEs in the radio cell or to a group of UEs, a third control signal. The third control signal is common to the radio cell or to the group of UEs and indicates the target configuration of one or more reference signals out of a set of reference signal configurations. The reference signals are one or more of a channel state information, CSI, reference signal and a tracking reference signal, TRS. In an optional implementation, the third control signal includes a reference signal configuration indication. The target reference signal configuration indication is in the form of an index indicating a target configuration of one or more reference signals to be used by the UE out of a set of reference signal configurations.

According to a 24th aspect, provided in addition to any one of the eighteenth to 23rd aspects, the processing circuitry determines one or more (blank) time periods during which the UE is allowed to skip one or more of receiving downlink communication from the base station and transmitting uplink communication to the base station. The transmitter transmits, to all the UEs in the radio cell or to a group of UEs, a fourth control signal. The fourth control signal is common to the radio cell or to the group of UEs and indicates the one or more (blank) time periods. In an optional implementation, the one or more (blank) time periods are defined in terms of time slots of a subframe, or in terms of OFDM symbols of a time slot, or in terms of subframes of a frame, or in terms of frames, or in terms of a time duration.

According to a 25th aspect, provided in addition to the 24th aspect, the processing circuitry determines one (blank) time period and a time duration of the one blank) time period. The fourth control signal indicates the one (blank) time period and the time duration. The one (blank) time period begins at a time after transmitting the fourth control signal and stops after the time duration of the one (blank) time period ends. In an optional implementation, the one time period is applied periodically with a time periodicity.

Alternatively, the processing circuitry determines a pattern of (blank) time periods out of a plurality of (blank) time period patterns. The fourth control signal indicates the determined pattern of (blank) time periods. In an optional implementation, the transmitter transmits a (blank) time period pattern configuration signal to configure the plurality of (blank) time period patterns.

According to a 26th aspect, provided in addition to the 24th aspect, the processing circuitry determines a slot format out of a plurality of slot formats, and includes a slot format indicator, SFI, identifying the determined slot format in the fourth control signal, wherein the slot format defines how each OFDM symbol of a slot is to be used. In an optional implementation,

- the slot format defines each OFDM symbol of a slot as being a downlink, an uplink or a flexible OFDM symbol, and wherein the processing circuitry, when in operation, determines that each flexible OFDM symbol is one of the (blank) time periods, or
- the slot format defines each OFDM symbol of a slot as being a downlink, an uplink, a flexible or a (blank) OFDM symbol during which the UE is allowed to skip one or more of receiving downlink communication from the base station and transmitting uplink communication to the base station, and wherein the processing circuitry, when in operation, determines that each (blank) of said OFDM symbol during which the UE is allowed to skip one or more of receiving downlink communication from the base station and transmitting uplink communication to the base station is one of the (blank) time periods.

According to a 27th aspect, provided in addition to any one of the eighteenth to 26th aspects, the processing circuitry determines whether to instruct the UE to perform one or both of:

- skip monitoring a downlink control channel for a period of time, and
- switch to a target search space set group, indicated in the fifth control signal.

The transmitter transmits, to all the UEs in the radio cell or to a group of UEs, a fifth control signal, wherein the fifth control signal is common to the radio cell or to the group of UEs and indicates the determined instruction. In an optional implementation, the fifth control signal has a lower priority than another control signal that is specific to the UE and that indicates to perform one of skip monitoring the downlink control channel and of switch to a target search space set group.

According to a 28th aspect, provided in addition to the eighteenth, the 21st, the 23rd, the 24th and the 27th aspects, any combination of two or more of the first to fifth control signals is transmitted by the base station in a same message to the UE.

According to a 29th aspect, a method is provided comprising the following steps performed by a base station:

determining a target bandwidth part, BWP, for operation,

transmitting, to all UEs in the radio cell or to a group of UEs, a first control signal, wherein the first control signal is common to the radio cell or to the group of UEs and indicates the target BWP,

operating according to the indicated target BWP.

According to a 30th aspect, an integrated circuit is provided, which, in operation, controls a process of a user equipment, the process comprising the following steps performed by the user equipment:

receiving, from a base station, a first control signal that is common to a radio cell or to a group of UEs, to which the UE belongs, wherein the first control signal indicates a target bandwidth part, BWP, for operation,

operating according to the indicated target BWP.

According to a 31st aspect, an integrated circuit is provided, which, in operation, controls a process of a base station, the process comprising the following steps performed by the base station:

determining a target bandwidth part, BWP, for operation,

transmitting, to all UEs in the radio cell or to a group of UEs, a first control signal, wherein the first control signal is common to the radio cell or to the group of UEs and indicates the target BWP,

operating according to the indicated target BWP.

*Further Variants, including Hardware and Software Implementation of the present disclosure*

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

(Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

**Claims**

1.  A user equipment, UE, comprising:

    a receiver, which in operation, receives, from a base station, a first control signal that is common to a radio cell or to a group of UEs, to which the UE belongs, wherein the first control signal indicates a target bandwidth part, BWP, for operation,
    processing circuitry, which in operation, operates according to the indicated target BWP.

2.  The UE according to claim 1, wherein the target BWP is one of:

    • a default BWP configured at the UE,
    • an initial BWP configured at the UE,
    • a dormant BWP configured at the UE,
    • a first non-dormant BWP configured at the UE,
    • a common BWP configured at the UE, the common BWP being common to all UEs in the radio cell of the base station or common to the group of UEs,

    wherein the target BWP has a smaller, larger or the same frequency bandwidth than the currently-active BWP.

3.  The UE according to claim 1 or 2, wherein the first control signal indicating the target BWP for operation is one of:

    • a downlink control information, DCI, message, optionally including one of

        ◦ a DCI message for paging,
        ◦ a DCI message for notifying one or more of a slot format and search space set group switching, for example a DCI message having a format of a DCI format 2_0 of a 3GPP communication system,
        ◦ a DCI message for notifying power saving information, for example a DCI message having a format of a DCI format 2_6 of a 3GPP communication system,
        ◦ a DCI message for notifying one or more of whether to start monitoring paging control signal and of whether a reference signal is available, for example a DCI message having a format of a DCI format 2_7 of a 3GPP communication system,

    • a message of the Radio Resource Control, RRC, protocol, and
    • a control element of the Medium Access Control, MAC, protocol.

4.  The UE according to any one of claims 1 to 3, wherein the first control signal that is common to a group of UEs, includes a plurality of blocks of information, where the UE is associated with at least one of the plurality of blocks of information, and the processing circuitry, when in operation, determines that block of information that is associated with the UE, optionally wherein the first control signal is a downlink control information message having a format of DCI format 2_6 of a 3GPP communication system, or

    wherein the first control signal that is common to a group of UEs is addressed to an identifier that is associated with the group of UEs,
    wherein the first control signal that is common to a radio cell is addressed to an identifier that is common to a complete radio cell.

5.  The UE according to any one of claims 1 to 4, wherein the receiver, when in operation, receives, from the base station, a second control signal that is common to the radio cell or to the group of UEs, to which the UE belongs, wherein the second control signal indicates a target synchronization signal block, SSB, pattern, comprising one or more SSBs out of a set of candidate SSBs, to be used by the UE, wherein the processing circuitry, when in operation, performs SSB-related functions based on the target SSB pattern indicated by the second control signal, optionally wherein the SSB-related functions include one or more of serving cell measurements, time synchronization, and frequency synchronization.

6.  The UE according to claim 5, wherein the second control signal includes an SSB pattern indication to indicate the target SSB pattern, wherein the SSB pattern indication is in the form of a bitmap, with each bit being associated with one candidate SSB out of the set of candidate SSBs and indicating whether the respective candidate SSB is transmitted or not,
optionally wherein each of the one or more candidate SSBs to be used by the UE is defined by one or more of the following parameters:

- a time-domain periodicity and offset of the candidate SSB,
- a sequence used for a synchronization signal of the candidate SSB,
- a beam index of the candidate SSB,
- a transmission power of the candidate SSB,
- a transmission power gap between the candidate SSB compared to a cell-defining SSB, and
- radio resources of a Physical Random Access Channel associated with the candidate SSB,
- a channel raster of the candidate SSB.

7. The UE according to any one of claims 1 to 6, wherein the receiver, when in operation, receives, from the base station, a third control signal that is common to the radio cell or to the group of UEs, to which the UE belongs, wherein the third control signal indicates a target configuration of one or more reference signals to be used by the UE out of a set of reference signal configurations,

wherein the reference signals are one or more of a channel state information, CSI, reference signal and a tracking reference signal, TRS,
optionally wherein the processing circuitry, when in operation, performs reference-signal-related functions based on the indicated target reference signal configuration, optionally wherein the reference-signal-related functions include one or more of channel state measurements, interference measurements, beam management, time tracking, and frequency tracking.

8. The UE according to claim 7, wherein the third control signal includes a reference signal configuration indication, wherein the target reference signal configuration indication is in the form of an index pointing to one reference signal configuration out of a plurality of reference signal configurations,
optionally wherein each set of reference signal configurations is defined by one or more of the following parameters:

- time radio resources,
- frequency radio resources,
- a sequence of the reference signal,
- a scrambling ID,
- Quasi Co Location, QCL, references,
- a transmission power gap compared to a reference synchronization signal block.

9. The UE according to any one of claims 1 to 8, wherein the receiver, when in operation, receives, from the base station, a fourth control signal that is common to a radio cell or to a group of UEs, to which the UE belongs, wherein the fourth control signal indicates one or more time periods during which the UE is allowed to skip one or more of receiving downlink communication from the base station and transmitting uplink communication to the base station, optionally wherein the one or more time periods are defined in terms of time slots of a subframe, or in terms of OFDM symbols of a time slot, or in terms of subframes of a frame, or in terms of frames, or in terms of a time duration.

10. The UE according to claim 9, wherein the fourth control signal indicates one time period and indicates a time duration of the one time period, wherein the one time period begins at a time after receiving the fourth control signal and stops after the time duration of the one time period ends, optionally wherein the one time period is applied periodically with a time periodicity, or
wherein the fourth control signal indicates a pattern of time periods out of a plurality of time period patterns, optionally wherein the receiver, when in operation, receives a time period pattern configuration signal to configure the plurality of time period patterns.

11. The UE according to claim 9, wherein the fourth control signal includes a slot format indicator, SFI, and the processing circuitry, when in operation, determines the indicated one or more time periods based on a value of the included SFI and an association between different slot format definitions and different SFI values, wherein the slot format defines how each OFDM symbol of a slot is to be used,
optionally wherein

• the slot format defines each OFDM symbol of a slot as being a downlink, an uplink or a flexible OFDM symbol, and wherein the processing circuitry, when in operation, determines that some or each flexible OFDM symbol is one of the time periods, or

• the slot format defines each OFDM symbol of a slot as being a downlink, an uplink, a flexible or a OFDM symbol during which the UE is allowed to skip one or more of receiving downlink communication from the base station and transmitting uplink communication to the base station, and wherein the processing circuitry, when in operation, determines that each of said OFDM symbol during which the UE is allowed to skip one or more of receiving downlink communication from the base station and transmitting uplink communication to the base station is one of the time periods.

12. The UE according to any one of claims 1 to 11, wherein the receiver, when in operation, receives, from the base station, a fifth control signal that is common to the radio cell or to the group of UEs, to which the UE belongs, wherein the fifth control signal indicates to the UE to perform one or both of:

- skip monitoring a downlink control channel for a period of time, and
- switch to a target search space set group, indicated in the fifth control signal,

optionally wherein the fifth control signal has a lower priority than another control signal that is specific to the UE and that indicates to perform one of skip monitoring the downlink control channel and of switch to a target search space set group.

13. The UE according to claims 1, 5, 7, 9 and 12, wherein any combination of two or more of the first to fifth control signals is transmitted by the base station in a same message to the UE.

14. A method comprising the following steps performed by a user equipment, UE:

receiving, from a base station, a first control signal that is common to a radio cell or to a group of UEs, to which the UE belongs, wherein the first control signal indicates a target bandwidth part, BWP, for operation, operating according to the indicated target BWP.

15. A base station comprising:

a processing circuitry, which in operation, determines a target bandwidth part, BWP, for operation, a transmitter, which in operation, transmits, to all UEs in the radio cell or to a group of UEs, a first control signal, wherein the first control signal is common to the radio cell or to the group of UEs and indicates the target BWP, the processing circuitry, which in operation, operates according to the indicated target BWP.

Fig. 1

Fig. 2

Fig. 3

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

Fig. 4

| NSSF | NEF | NRF | PCF | UDM | AF |
|---|---|---|---|---|---|

Nnssf  Nnef  Nnrf  Npcf  Nudm  Naf

Nausf  Namf  Nsmf

| AUSF | AMF | SMF |
|---|---|---|

Fig. 5

N1  N2  N4

| UE | (R)AN | UPF | DN |
|---|---|---|---|

N3  N6

N9

40

Fig. 6

Fig. 7

41

SSB start OFDM symbol numbers =
2, 8, 16, 22, 30, 36, 44, 50

Fig. 8

Fig. 9

channel

transceiver (transmitter, receiver)

input/output node

processing circuitry

communication device, UE

transceiver (transmitter, receiver)

input/output node

processing circuitry

scheduling device, BS, eNB/gNB

## Fig. 10

control signal
receiver

operation adaptation
circuitry

communication device, UE

## Fig. 11

UE Start

receive control signal

determine operation parameter based on control signal

operate according to determined operation parameter

## Fig. 12

control signal
transmitter

operation parameter
determination circuitry

operation adaptation
circuitry

base station

**Fig. 13**

base station
Start

determine operation parameter

transmit control signal, indicating the determined operation parameter

operate according to determined operation parameter

**Fig. 14**

UE

gNB

determine operation
parameter

transmit control signal,
indicating operation parameter

operate according to
indicated operation parameter

operate according to
indicated operation parameter

**Fig. 15**

Fig. 17

Fig. 16

Fig. 18

Europäisches Patentamt
European Patent Office
Office européen des brevets

# EUROPEAN SEARCH REPORT

**Application Number**

EP 21 21 7143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VIVO: "Discussion on remaining issues on multi TRP transmission", 3GPP DRAFT; R1-1910229_REMAINING ISSUES ON MULTI-TRPPANEL TRANSMISSION_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG1, no. Chongqing, China; 20191014 - 20191020 4 October 2019 (2019-10-04), XP051808132, Retrieved from the Internet: URL:https://ftp.3gpp.org/tsg_ran/WG1_RL1/TSGR1_98b/Docs/R1-1910229.zip R1-1910229_Remaining issues on multi-TRPPanel transmission_final.docx [retrieved on 2019-10-04] | 1-5,7-15 | INV. H04L5/00 |
| A | * sections 2-5 * | 6 | |
| X | SAMSUNG: "Corrections on Bandwidth Part Operation", 3GPP DRAFT; R1-1801988 CORRECTIONS ON BANDWIDTH PART OPERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 20 February 2018 (2018-02-20), XP051398352, Retrieved from the Internet: URL:http://www.3gpp.org/ftp/tsg%5Fran/WG1%5FRL1/TSGR1%5F92/Docs/ [retrieved on 2018-02-20] | 1-5,7-15 | TECHNICAL FIELDS SEARCHED (IPC) H04L |
| A | * sections 2-4 * | 6 | |

The present search report has been drawn up for all claims

| Place of search | Date of completion of the search | Examiner |
|---|---|---|
| The Hague | 16 May 2022 | Papadogiannis, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)